# EUROPEAN PATENT SPECIFICATION

(11) **EP 1 490 601 B1**
(45) Date of publication and mention of the grant of the patent: **15.08.2007**
(21) Application number: 03710004.7
(22) Date of filing: 21.03.2003
(51) Int. Cl.: F15C 5/00

(54) **MICROMECHANICAL COMPONENTS**
MIKROMECHANISCHE BAUELEMENTE
COMPOSANTS MACROMECANIQUES

(30) Priority: 23.03.2002 GB 0206912; 16.08.2002 GB 0219092
(43) Date of publication of application: 29.12.2004
(73) Proprietor: Starbridge Systems Limited, Swansea SA1 8PH (GB)
(72) Inventor: SMITH, Kevin, Swansea SA1 8PH (GB); CEFAI, Joseph, Swansea SA1 8PH (GB); SHAPLEY, Julian, Swansea SA1 8PH (GB); MARTINEAU, Peter, Swansea SA1 8PH (GB)
(74) Representative: Pearson, James Ginn
(86) International application number: PCT/GB2003/001218
(87) International publication number: WO 2003/081052

(56) References cited:
- US-A- 3 782 121
- US-A- 4 637 071
- US-A- 4 824 073
- US-A- 5 238 223
- US-A- 5 346 372
- US-A- 5 367 878
- US-A- 6 160 243
- US-B1- 6 311 713

## Description

### Background of the Invention

This invention relates to a system component, the operation of which requires the provision of heat to at least a part thereof ; and to a system including one or more such components.

There are many different systems and devices which employ at least one component required to be heated to effect operation thereof. In prior art systems and devices, such components are generally heated via electrical, typically, resistive heaters which require the use of two connections to each component. Obviously, the greater the number of such components employed within a system or device, the greater will be the number of electrical connections required to effect the heating operation, which substantially increases the complexity of the resultant circuit and limits the number of components which can be employed in a single system or device. Other types of actuation mechanisms having the same problem include electrostatically actuated devices, piezo-electrically actuated devices, thermopneumatically actuated devices using an electrical heater or thermoelectric pump to provide the required rise in temperature, and bimetallic strips and shape memory alloys heated by means of an electrical current.

This is particularly undesirable in the case of a system or device employing micro-components. Such a system typically comprises a three-dimensional arrangement of a large number of micro-components. However, in the case of micro-components each requiring mechanical actuation, the resultant system is relatively complex in view of the individual pairs of connections required for each actuator, and the number of micro-components which can be used in any one system is also severely limited.

GB Patent Application GB-2150 780 - A describes an optical actuator for the remote actuation of a controlled device, for example, a hydraulic valve. Optical power, e.g. from a laser, is conveyed via an optical fibre to the controlled device, where it falls on a heat-absorbent surface, as a result of which an output rod is driven, which operates the controlled device. This may be achieved by the provision of a volatile fluid (e.g. freon) which evaporates when heated by the optical power to drive a bellows, a bimetallic strip, a thermostat-type capsule, or a memory metal strip.

GB-2072 756 - A describes an engine comprising first and second axes on which are mounted first and second respective pulleys. A single belt, made of shape memory alloy, is trained over the pulleys, which belt is heated at a first region and cooled at a second region. The heated belt contracts when cooled to produce a driving torque on the pulleys.

International Patent Application No. WO 98/38931 describes a micro-gripper for a catheter having a heat absorbent member to which electromagnetic energy (e.g. heat, laser) is delivered via an optical fibre. An electromagnetic energy-to-mechanical power converter is connected to receive the electromagnetic energy and mechanically actuate the micro-gripper.

US Patent No. 6,166,361 describes an actuator comprising a pressurised fluid and a piston contained in a reservoir by a friable metal closure. The closure is heated by microwave radiation to allow the fluid to expand and push the piston upwards, which movement causes positional displacement external to the actuator.

German Patent Specification No. DE-2908694-A describes a drive unit for driving, for example, a water pump. The drive unit comprises a chamber filled with a thermopneumatic material and within which is disposed a piston. The thermopneumatic material may comprise, for example, wax, paraffin, stearin, etc., and the unit uses volume changes during rapid heating above and cooling below the melting temperature of the thermopneumatic material to move the piston. The material is heated and cooled by a heat transfer medium surrounding the chamber, and heating is preferably achieved by means of solar radiation.

German Patent Specification No. DE-2944732-A describes a drive unit similar to that of DE-2908694-A, except alternate heating (by solar radiation) and cooling of a bimetallic element is employed to displace the piston in the cylinder.

Japanese Patent Specification No. JP-61070175-A describes an actuator comprising an optical switching element in the form of a semiconductor. Infrared light is transmitted to the semiconductor via an optical fibre. If the temperature of the semiconductor is low, the IR light passes through it to a second optical fibre, via which the light is transmitted to a thermally deformable metal. Thus, the thermally deformable metal is heated so that it expands and creates mechanical movement. If, however, the temperature is high, it absorbs the infrared light so that it is not transmitted to the second optical fibre. Therefore, the thermally deformable material is cooled and contracts to create mechanical movement.

Japanese Patent Specification No. JP-8326648-A describes an optically driven actuator, comprising a shape memory alloy member with a heat conductive layer aligned with an optical fibre. Light from a laser is transmitted to the centre of the shape memory alloy (via the optical fibre). The heat conductive layer causes the energy to quickly spread to the whole of the shape memory alloy to heat it and create an actuating force.

British Patent No. 1 540 330 describes a micrometer operated by heating (by radiation) and cooling bimetal blades of a rotor to create a torque.

However, none of the arrangements described above are particularly well-suited for use in a system or device employing micro-components.

US4824073 discloses a device having a chamber containing a material that is heated by exposing the material to radiation. Heating of the material causes it to expand, thus causing a flexible diaphragm to move outwards and engage with a sealing member to form a seal and thus prevent the flow of a fluid. The device therefore acts as a valve.

US4637071 discloses a device including an actuator with a heat-absorbing matt-black surface which is heated when exposed to radiation from an optical fibre. The heated surface heats Freon (a volatile liquid) placed in a chamber of which the surface forms a part. The Freon evaporates, therefore increasing in volume and causing the diaphragm to move outwards, thus moving an actuating rod.

### Summary of the Invention

We have now devised an improved arrangement which overcomes the problems outlined above.

In accordance with the present invention, there is provided a system including at least one component, at least part of which is required to be heated to effect operation thereof, and an electromagnetic radiation source for heating said component, wherein the component comprises a chamber which is at least partially formed of a flexible material, the chamber housing a thermopneumatic material, and the system is so arranged that when said thermopneumatic material is heated by said electromagnetic radiation source, the thermopneumatic material expands within the chamber causing movement of said flexible material
characterised in that
said thermopneumatic material is a wax which undergoes volume expansion due to a phase change upon heating, and
an electromagnetic radiation absorbing material in the form of an additive has been introduced into the wax, wherein, in use, the electromagnetic radiation absorbing material absorbs infra-red radiation of a given wavelength from the electromagnetic radiation source so as to produce a rise in temperature in the wax.

Thus the active part of the component is arranged to absorb the electromagnetic radiation (preferably selectively, and possibly at specific wavelengths) so as to generate heat within the active part of the component. The component could, for example, be coated with electromagnetic radiation absorbing layers or (at least partly) fabricated of electromagnetic radiation absorbing material.

Thus, the component includes means arranged to produce mechanical movement in response to a rise in temperature. This is particularly useful in the case of an actuator for a valve, pump, mirror, lens, or the like, where the system comprises a plurality of such components and their respective actuators, especially in the case where such components are micro-components.

The thermopneumatic material, (i.e. a material which undergoes an expansion of volume in response to a phase change in response to a rise in temperature) comprises wax. The chamber is beneficially provided with (or at least partially coated with) an electromagnetic radiation absorbing material such that the required rise in temperature can be effected by the application of electromagnetic radiation thereto.

Organic materials such as polymers and waxes absorb infra red at specific wavelengths. This is determined by the presence of certain chemical bonds in the chemical structure of the material. Due to the fact that there are a defined number of possible chemical bonds, organic materials are also completely transparent to certain wavelengths in the infra red region that are not absorbed by the range of different chemical groups. It is advantageous to use an infra red wavelength that is not absorbed by organic materials to achieve excellent transmission through materials that may be used in the construction of thermopneumatic actuated devices. These materials include engineering polymers and plastics as well as glass and silicon. The infra red absorbing element in the thermopneumatic device, typically the wax, would not absorb at these specific infra red wavelengths in its natural, unmodified state, and would therefore have to be chemically modified, additives introduced into the wax, or new materials would have to be chemically synthesised to confer absorption on the material.

The use of the arrangement described above, i.e. an infra red wavelength that is not absorbed by the construction material and the modification of the thermopneumatic material to absorb this wavelength results in localising the energy absorption and therefore localising the heating to the thermopneumatic material and not the surrounding construction materials. Significant advantages result in terms of power consumption, control of power delivery and heat management.

Another advantage relates to the optical system required to deliver the radiant energy to the device. The use of wavelengths that are not normally absorbed by organic materials results in the ability to use materials and methods for this process, that are inexpensive and commonly available. As an example, the use of polymer and glass optical components would be possible even at very high-energy transmission densities.

The present invention extends to the provision of a system comprising a plurality of the above-defined components. In the case where such components are micro-components, the system may comprise a three dimensional array of micro-components, for example, micro-valves and their respective actuators. In one embodiment of the present invention, each component requiring electromagnetic energy to effect heating thereof may include its own, possibly internal, electromagnetic energy source. In the case where an internal electromagnetic source, such as an LED or laser diode, is provided, this may be instead of or in addition to an external electromagnetic source. In one specific embodiment, where a system comprises a plurality of components, such components are preferably supplied from the same one or more electromagnetic energy sources. In one specific embodiment, the electromagnetic energy source for a system comprising a plurality of components may comprise at least two sources which are arranged to intersect at the location(s) at which the components are required to be heated.

The components are preferably mounted on a substrate, and the electromagnetic energy source(s) may comprise one or more of a focussed or laser beam (in which case the components are typically directly irradiated by the source), a light emitting diode, a laser diode, any other laser or incandescent light source. The electromagnetic radiation may be provided to the component via one or more optical waveguides or optical fibres. Thus, in one embodiment of the invention, the relative positions of the component and radiation source(s) may be fixed, with the radiation source(s) being switched on and off as required to actuate the component.

In another embodiment of the invention, the radiation source(s) and/or the component (or the substrate on which the component is mounted) may be movable relative to each other. Thus, the electromagnetic radiation source may be moved so as to be directed at the component itself (or at least the portion of the component required to be heated) or at the accessible optical facets of one or more optical waveguides or optical fibres, as appropriate. In the embodiment referred to above, in which two or more sources are required to intersect at a specific location, one or other of the sources may be movable so as to alter the intersecting point of the sources.

In yet another embodiment, the component (or substrate on which the component is mounted) may be moved relative to a radiation source (or the intersecting point of two or more sources), so that the component (or part of the component) required to be heated to effect operation thereof can be moved in and out of the actuation source, as required. Alternatively, or in addition, the accessible optical facets of an optical waveguide or optical fibre may be moved relative to the radiation path or intersecting point of two or more sources, as required.

In one specific embodiment, the components may be mounted on a compact disc (CD) or the like, which is rotated relative to one or more radiation sources directed at specific points on the plane of the CD Player, such that selected components enter and leave the radiation path as they pass through those specific points when the CD is being rotated. The radiation source may also be moved, simultaneously or otherwise.

### Brief Description of the Drawings.

Embodiments of the present invention will now be described in detail, by way of examples only, and with reference to the accompanying drawings, in which:
Figure 1 is a schematic cross-sectional side view of an actuator according to a first exemplary embodiment of the present invention;
Figure 2 is a schematic cross-sectional side view of an actuator according to a second exemplary embodiment of the present invention;
Figure 3 is a schematic cross-sectional side view of an actuator according to a third exemplary embodiment of the present invention;
Figure 4 is a perspective view of the actuator of Figure 1,2 or 3;
Figure 5is a schematic cross-sectional side view of an actuator according to an sixth exemplary embodiment of the present invention;
Figure 6 is a schematic cross-sectional view of an actuator according to a seventh exemplary embodiment of the present invention;
Figure 7 is a schematic cross-sectional view of an actuator according to a eighth exemplary embodiment of the present invention;
Figure 8 is a perspective view of a three-dimensional system comprising a plurality of actuators according to an exemplary embodiment of the present invention;
Figure 9 is a schematic side view of a system according to another exemplary embodiment of the invention;
Figure 10 is a schematic perspective view of a fluidic platform including one or more components according to yet another exemplary embodiment of the invention, and a base unit for receiving the fluidic platform;
Figures 11 A and 11B are schematic cross-sectional views illustrating the method of construction of the fluidic of Figure 12;
Figure 12 is a schematic cross-sectional view of the fluidic platform of Figure 10;
Figure 13 is a schematic plan view of the fluidic platform of Figure 12;
Figures 14A and 14B are schematic cross-sectional views of the fluidic platform of Figure 12, when in use;
Figure 15 is a schematic illustration of the configuration of a component or system according to an exemplary embodiment of the present invention;
Figure 16 is a schematic cross-sectional view of a micro-valve according to an exemplary embodiment of the present invention;
Figure 17 is a schematic cross- sectional view of a micro-valve according to another exemplary embodiment of the present invention;
Figures 18A, B and C illustrate possible actuator diaphragm structures for use in a component or system according to an exemplary embodiment of the present invention;
Figure 19 is a schematic cross-sectional view of a micro-valve according to yet another exemplary embodiment of the present invention;
Figure 20 is a schematic cross-sectional view of a micro-valve according to yet another exemplary embodiment of the present invention;
Figure 21 is schematic cross-sectional view of a micro-valve according to yet another exemplary embodiment of the present invention;
Figure 21A is plan view of the valve membrane of the valve of Figure 21;
Figure 22 is a schematic cross-sectional view of a micro-valve according to yet another exemplary embodiment of the present invention;
Figure 23 is schematic cross-sectional view of a micro-valve according to yet another exemplary embodiment of the present invention;
Figure 23A is a planned view of the base of the actuator body of the device of Figure 23;
Figure 24 is schematic cross-sectional view of a micro-valve according to yet another exemplary embodiment of the present invention;
Figure 25 is a schematic illustration of a method of cooling a micro-valve according to an exemplary embodiment of the present invention;
Figure 26 is a schematic cross-sectional view of a micro-valve according to yet another exemplary embodiment of the present invention;
Figure 27 is a schematic cross-sectional view of a micro-valve according to yet another exemplary embodiment of the present invention;
Figure 27A is a schematic plan view of the base of the actuator body of the device of Figure 27;
Figure 28 is schematic cross-sectional view of a micro-valve according to yet another exemplary embodiment of the present invention;
Figure 28A is a schematic plan view of the base of the actuator body of the device of Figure 28;
Figure 29 is a schematic plan view illustrating an array of wax reservoirs;
Figure 30 is schematic plan view of an array of wax reservoirs including reservoir isolator structures;
Figures 30A and 30B are schematic views illustrating the structure of exemplary reservoir isolator structures between two wax reservoirs;
Figure 31 is a schematic perspective view of an array of wax reservoirs;
Figure 31 A is schematic cross-sectional view of the arrangement of Figure 31;
Figure 32 is a schematic cross-sectional view of a micro-valve according to yet another exemplary embodiment of the present inventions, illustrating one method of illumination;
Figure 33 is schematic illustration of a possible method of delivering electromagnetic energy to the wax reservoirs of a micro-valve according to an exemplary embodiment of the present invention;
Figure 33A is schematic cross-sectional view through section A-A- of Figure 33;
Figure 34 is a schematic illustration of another method of delivering electromagnetic energy to the wax reservoirs of a micro-valve system according to an exemplary embodiment of the present invention;
Figure 34A is a schematic cross-sectional view through section A-A- of Figure 34;
Figure 35 is a schematic illustration of yet another possible method of delivering electromagnetic energy to the wax reservoirs of a micro-valve system according to an exemplary embodiment of the present invention;
Figure 36 is a schematic illustration of a LED matrix for providing illumination;
Figure 37 is a schematic perspective view of an optical fibre bundles for providing illumination;
Figure 38 is a schematic representation of yet another possible method of delivering electromagnetic energy through the wax reservoirs of a micro-valve system according to an exemplary embodiment of the present invention;
Figure 39 is a schematic representation of yet another possible method of delivering electromagnetic energy to the wax reservoirs of a micro-valve system according to an exemplary embodiment of the present invention;
Figure 40 is a schematic perspective view of a micro-valve system according to an exemplary embodiment of the present invention;
Figures 41A, B and C are schematic cross-sectional views of a micro-valve according to yet another exemplary embodiment of the present invention when in use;
Figures 42A, B and C are schematic cross-sectional views of a micro-valve according to yet another exemplary embodiment of the present invention when in use;
Figure 43 is a schematic illustration of an insulin pump employing one or more components according to an exemplary embodiment of the invention;
Figure 44 is a schematic cross-section of a pump suitable for use in the arrangement of Figure 43;
Figure 45 is a schematic cross-section of a valve suitable for use in the arrangement of Figure 43; and
Figure 46 is a schematic cross-section of an alternative configuration of the pump of Figure 43.

It will be appreciated that, although micro-valves are referred to specifically herein, the present invention may equally apply to any fluidic components, including valves generally and fluid pumping chambers.

### Detailed Description of Embodiments of the Invention.

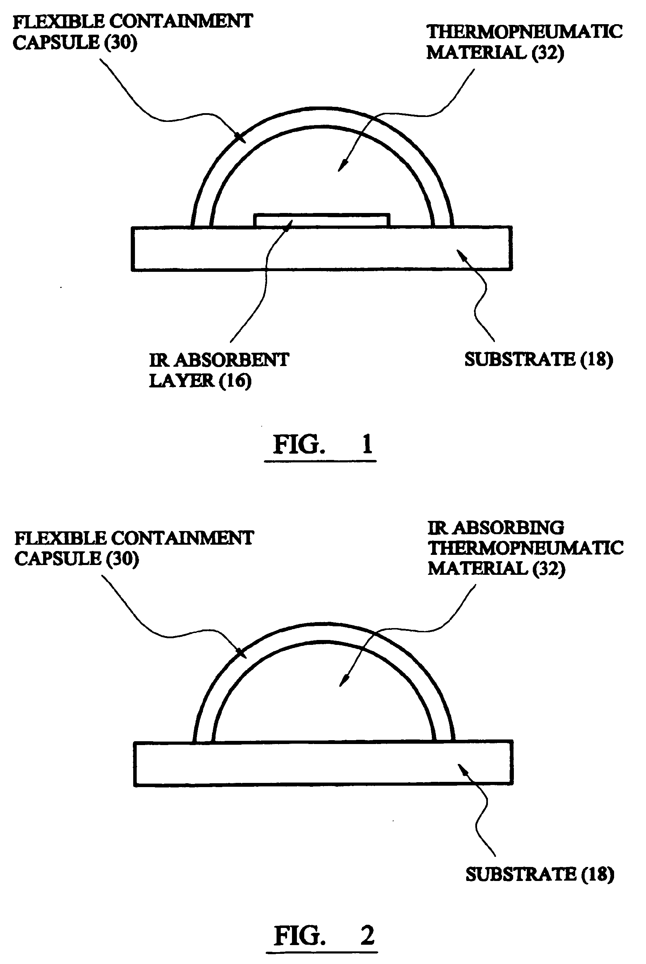

Referring to Figure 1 of the drawings, an actuator according to a first exemplary embodiment of the present invention comprises a chamber or capsule 30 of a flexible material, which chamber or capsule 30 is mounted on a substrate 18. Within the capsule 30 is a quantity of thermopneumatic material 32. Also disposed within the capsule 30 is an infrared radiation absorbing layer 16. In use, infrared radiation is applied to the capsule 30 at or close to the location of the infrared radiation absorbing layer 16, thereby causing the thermopneumatic material 32 within the capsule 30 to be heated. As the thermopneumatic material 32 is heated, it expands in volume and causes movement of the flexible material forming the capsule 30, i.e. it causes mechanical movement thereof. As the thermopneumatic material 32 cools, it returns to its original volume and the flexible material of the capsule returns to its original position accordingly.

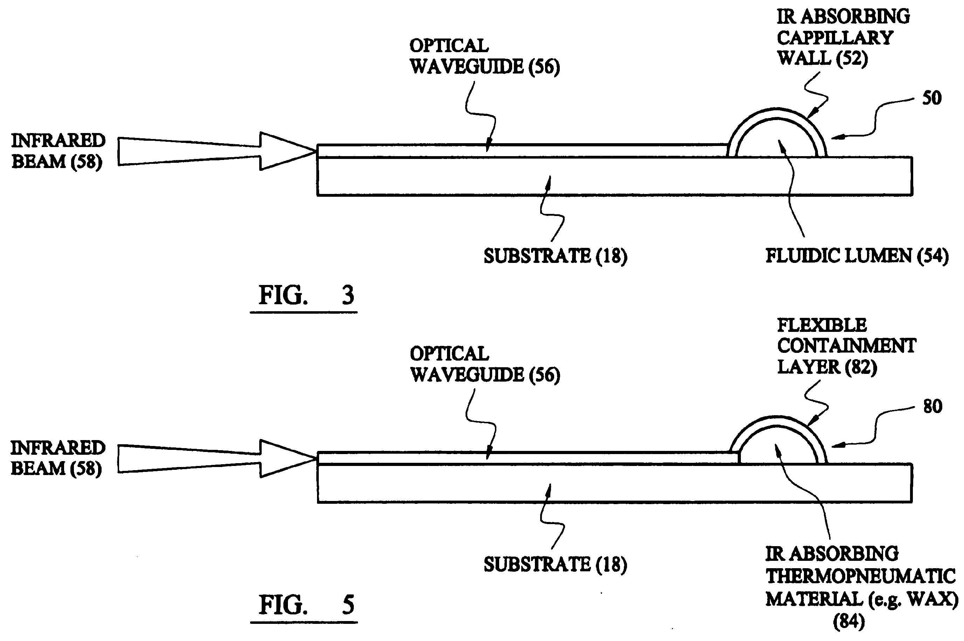

Referring to Figure 2 of the drawings, in an alternative exemplary embodiment of the present invention, the thermopneumatic material 32 within the capsule 30 may itself be infrared radiation absorbing by nature, thereby eliminating the need for an infrared radiation absorbing layer within the capsule 30. The thermopneumatic material 32 may, for example, be treated by (say) adding a dye thereto so as to make it absorbant of the incident radiation (in this case, IR).

Referring to Figure 3 of the drawings, an actuator according to yet another exemplary embodiment of the present invention comprises a chamber or capillary 50 of an infrared radiation absorbing material 52, mounted on a substrate 18. Within the capillary 50 is a fluid 54 that requires heating. An optical waveguide 56 is also mounted on the substrate 18 and runs from an infrared radiation source to the outer wall of the capillary 50. In use, a beam 58 of infrared radiation is applied to the optical waveguide 56, which carries the radiation to the outer wall of the capillary 50 where it is absorbed and causes the fluid 54 within the capillary 50 to be heated.

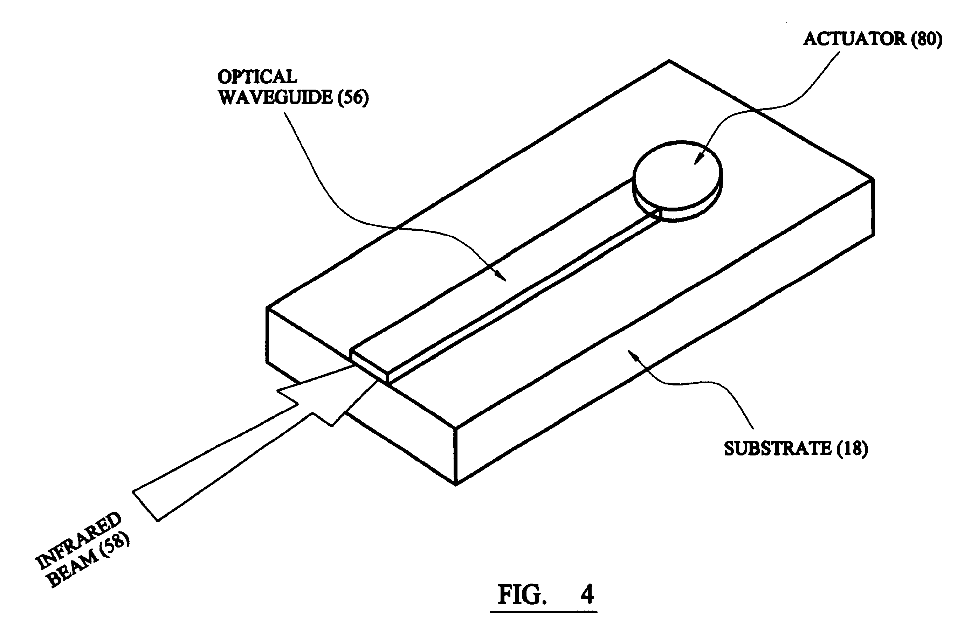

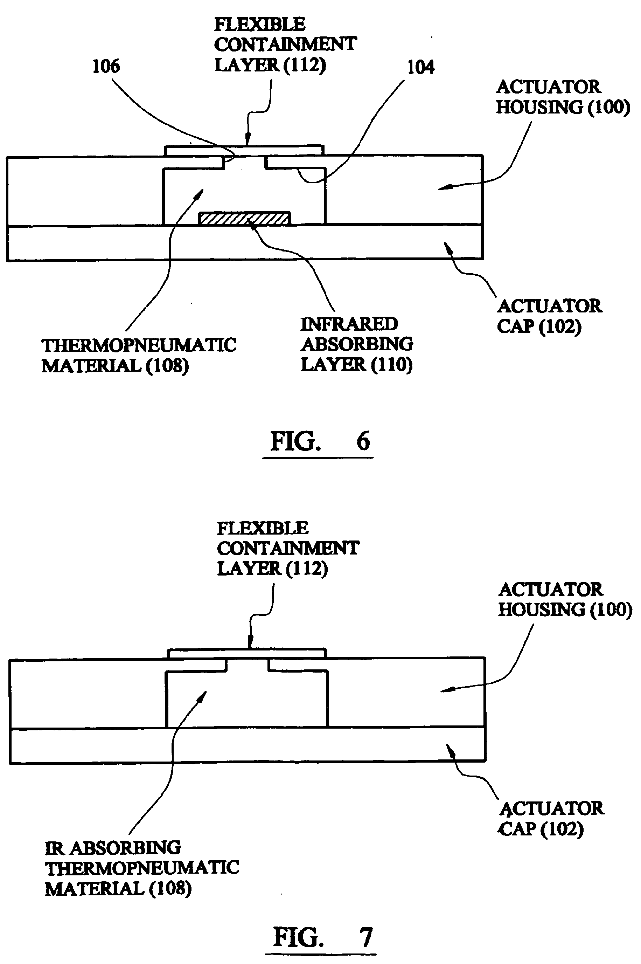

The actuator illustrated in Figures 4 and 5 of the drawings is similar in many respects to that shown in (and described with reference to) Figures 5 to 7, except in this case, the actuator comprises a chamber 80 formed by a flexible containment layer 82, and an infrared absorbing thermopneumatic material 84 (e.g. wax) is provided within the chamber 80. Once again, in use, a beam 58 of infrared radiation is applied to the optical waveguide 56, which carries the radiation to the flexible containment layer 82 through which it travels and causes the thermopneumatic material 84 within the chamber 80 to be heated. As the temperature of the thermopneumatic material 84 increases, so the material 84 expands in volume and causes mechanical movement of the flexible containment layer 82. As the thermopneumatic material 84 cools, it returns to its original volume and the flexible containment layer 82 returns to its original position.

Referring to Figure 6 of the drawings, an actuator according to another exemplary embodiment of the present invention, comprises a housing 100 mounted on a cap 102. The housing 100 defines a chamber 104 with a gap 106 at the top. Within the chamber 104 there is a quantity of thermopneumatic material 108 and an infrared radiation absorbing layer 110. A flexible containment layer 112 is provided over the gap 106 in the chamber 104. In use, once again, infrared radiation is applied to the infrared radiation absorbing layer 110 causing the thermopneumatic 108 material to be heated and to expand in volume accordingly. Such expansion in volume of the thermopneumatic material 108 causes movement of the flexible containment layer 112. When the thermopneumatic material 108 cools, the resultant phase change causes it to return to its original volume such that the flexible containment layer 112 returns to its original position.

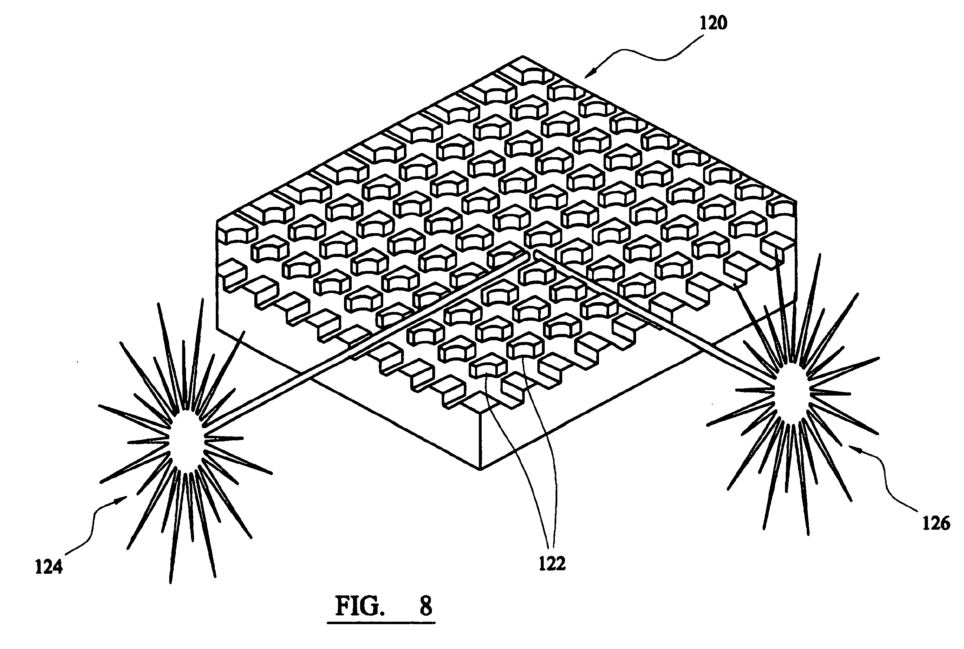

The actuator shown in Figure 7 of the drawings is similar in many respects to that shown in (and described with reference to) Figure 8, except that the thermopneumatic material 108 is itself infrared radiation absorbing in nature (or treated to make it so), thereby eliminating the necessity for a separate infrared radiation absorbing layer within the chamber 104.

Referring to Figure 8 of the drawings, a system 120 according to an exemplary embodiment of the present invention comprises a three-dimensional array of components 122 according to the invention. Two infrared radiation sources 124, 126 are provided to supply all of the components within the system 120. The radiation sources 124, 126 are at an angle, say, perpendicular to each other, as shown, and their beams are arranged to intersect at a location in or on at least one component required to be heated. The energy at the intersection of the beams is sufficient to heat. The energy at any other point is generally not. A control system (not shown) is provided to enable the component(s) to be heated to be selected and to control the application of infrared radiation from the sources 124, 126 accordingly.

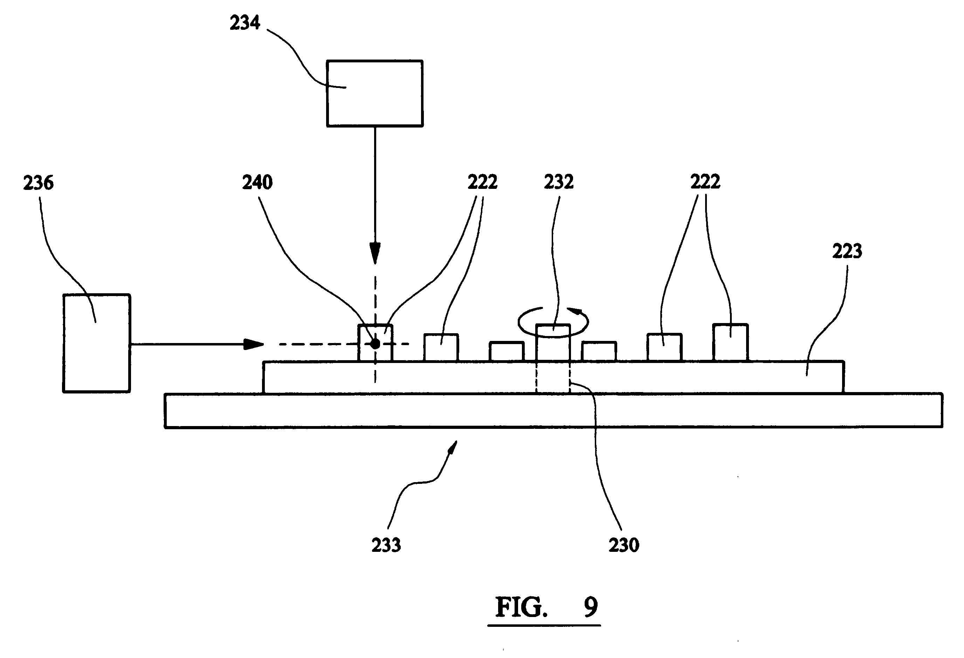

Referring to Figure 9 of the drawings, in another specific exemplary embodiment of the invention, a plurality of micro-valves 222 are mounted on the surface of a disc-like substrate 223. The substrate 223 is provided with central aperture 230 for mounting the substrate 223 on a spindle 232 of a compact disc player 233 or the like. One or more laser sources 234, 236 are provided (as in a standard compact disc reader, for playing music or running software, for example), laser radiation from which impinges on the upper surface of the substrate 223. The micro-valves 222 are arranged concentrically around the substrate 223. In the illustrated example, two laser sources 234, 236 are provided, the radiation beams from which intersect at point zero. As the substrate 223 is rotated by operation of the spindle 232, each of the components 222, in turn, passes through point 240 and is actuated, as required.

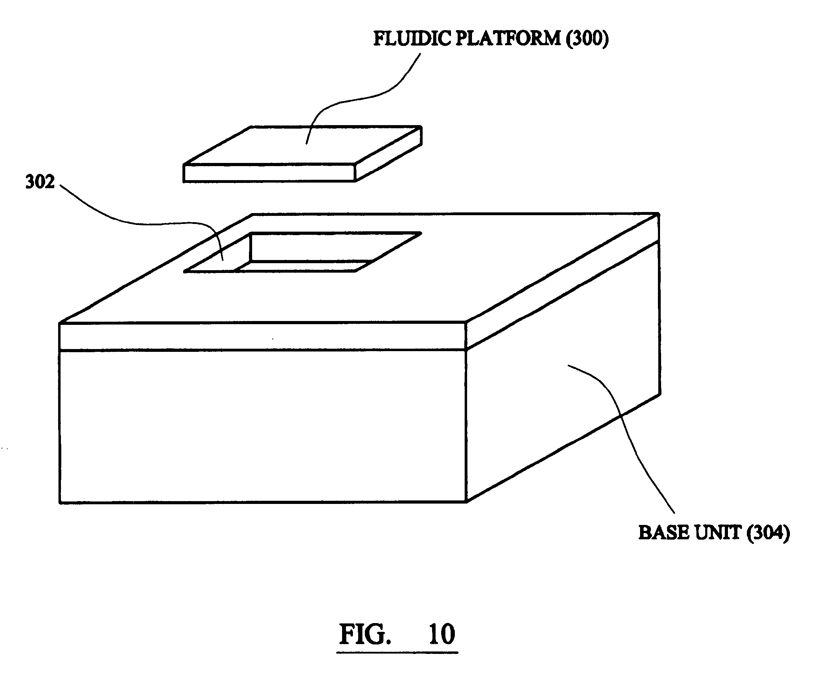

Referring to Figure 10 of the drawings, yet another specific exemplary embodiment of the present invention comprises one or more valves provided in or on a fluidic platform 300, which is configured to be received in a recess of 302 of a base unit 304.

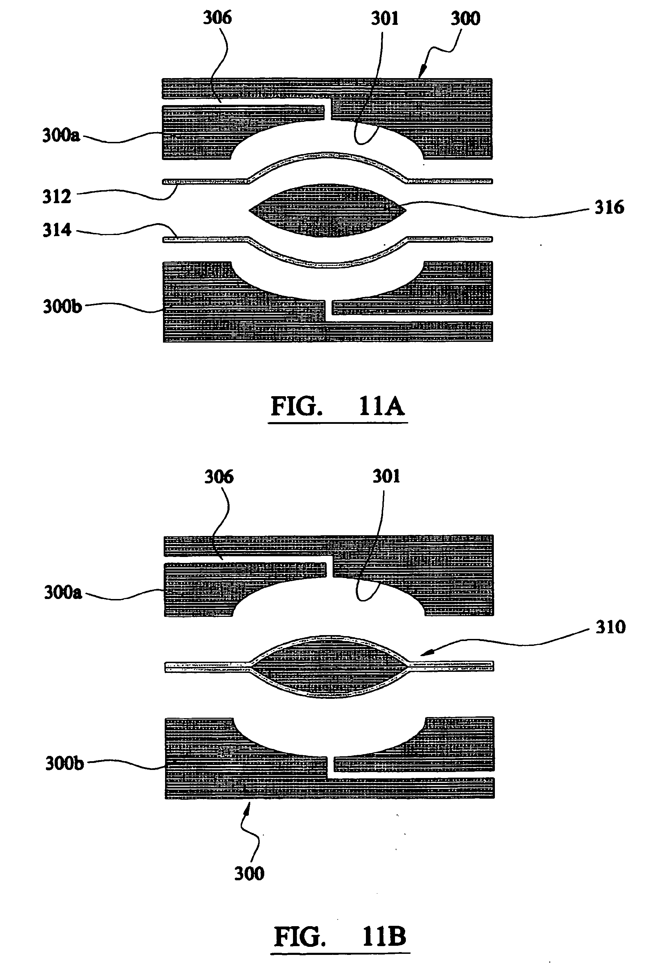

Referring to Figures 11A and 11B of the drawings, the fluidic platform 300 of this exemplary embodiment of the present invention created in two halves 300a, 300b which, when placed together, define a hollow recess 301 between them. The upper half 300a of the platform has a fluid inlet 306 leading to the upper half of the recess 301, and the lower half 300b of the platform has a fluid outlet 308 leading out from the lower half of the recess 301. The valve 310 comprises two flexible membranes 312, 314 which are brought together around a quantity of thermopneumatic material 316 and sealed at the edges to define a flexible chamber filled with thermopneumatic material 316, such as wax.

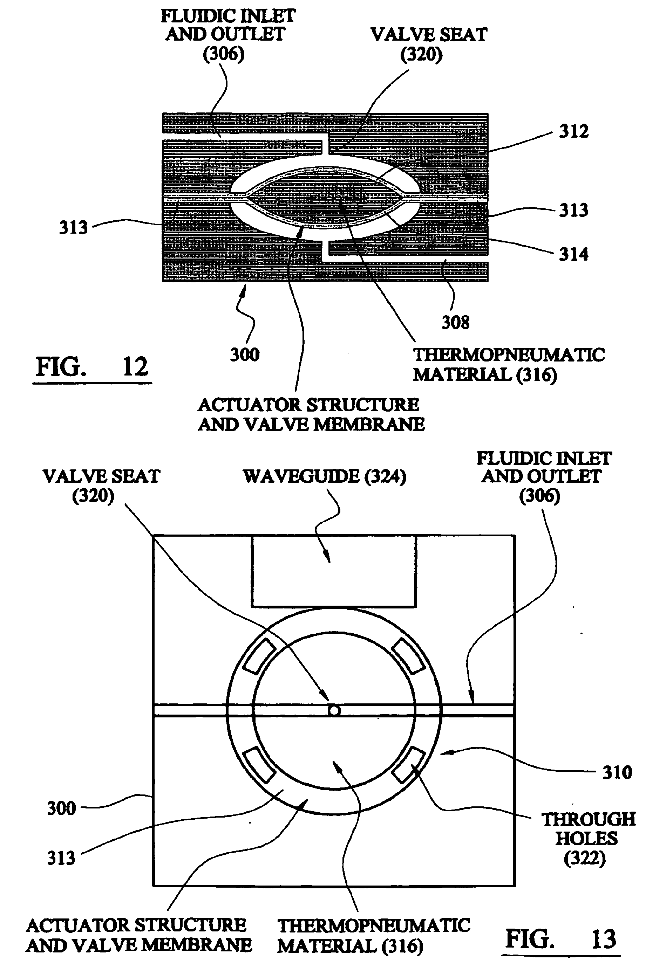

Figures 12 and 13 of the drawings illustrate the completed fluidic platform 300. The outer (sealed) edges 313 of the actuator structure and valve membrane 312, 314 is provided with one or more through holes 322. A valve seat 320 is defined generally centrally, and a waveguide 324 may be provided to transmit electromagnetic radiation to the valve 310, although the EM radiation may, of course, be provided directly thereto.

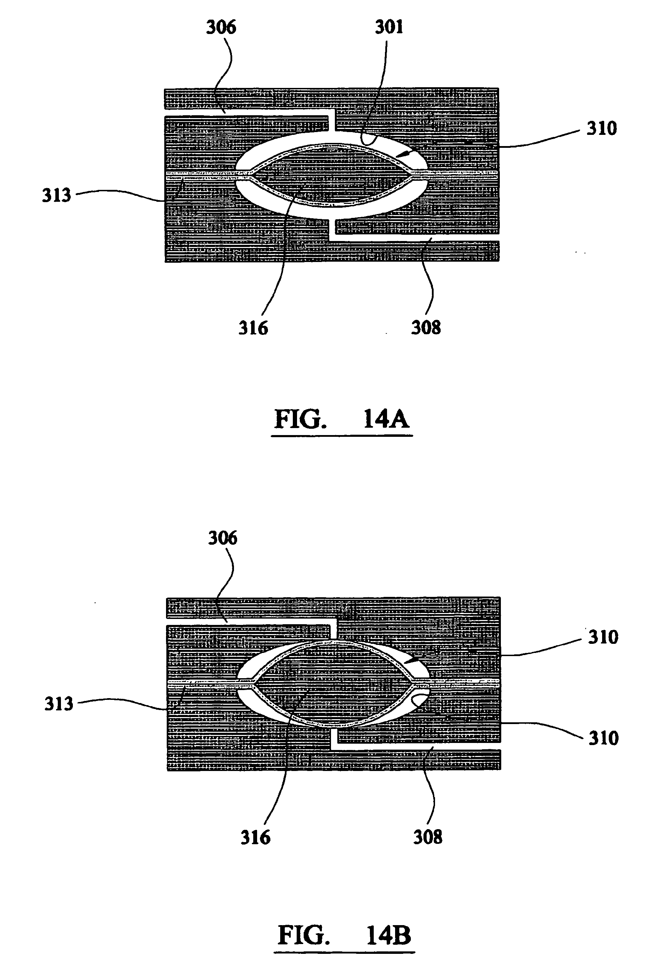

Referring to Figures 14A and 14B of the drawings, in use, when the valve is open, fluid can flow from the inlet 306 to the outlet 308, via the through-holes 322 in the valve membrane 313. However, when electromagnetic radiation is transmitted to the valve 310 via the waveguide 324, the thermopneumatic material 316 expands, causing the valve chamber to expand within the recess 301 and block the path between the inlet 306 and the outlet 308, thereby preventing fluid flow (Figure 14B). When the thermopneumatic material 316 is cooled, it contracts back to its original volume, thereby reducing the size of the valve chamber and unblocking the flow path between the inlet 306 and the outlet 308, so that fluid flow there between can resume (see Figure 14A).

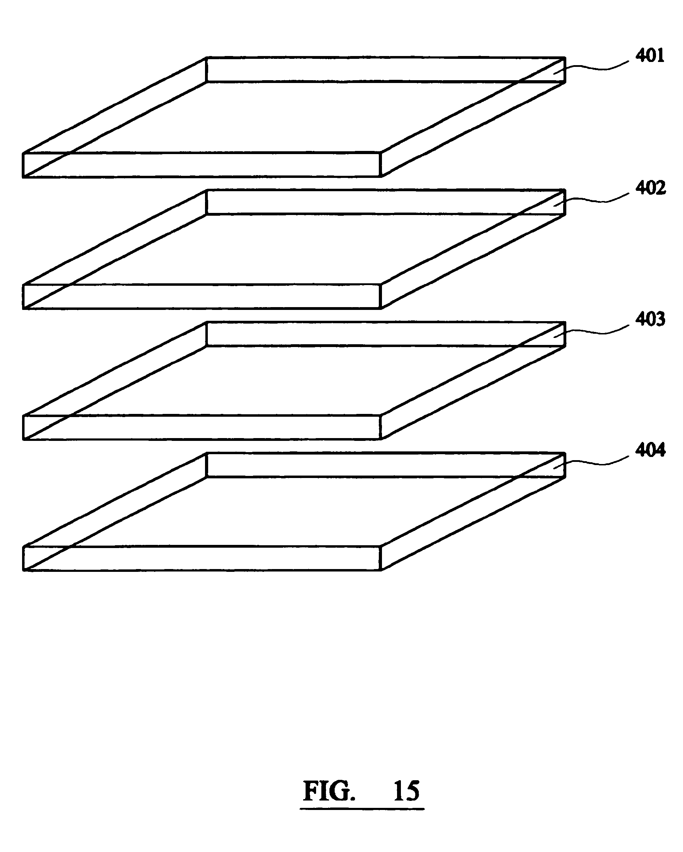

Figure 15 of the drawings is a schematic illustration of an IR-actuated component or system according to an exemplary embodiment of the present invention, comprising a fluidic layer 401 containing the valve structures, micro-pumps, etc., an actuator "layer" 402 which effectively just represents the actuator function, an optics layer 403, and a cooling layer 404, which could alternatively be positioned on the other side of the fluidic layer 401.

A number of design options for each of the above mentioned layers will now be described.

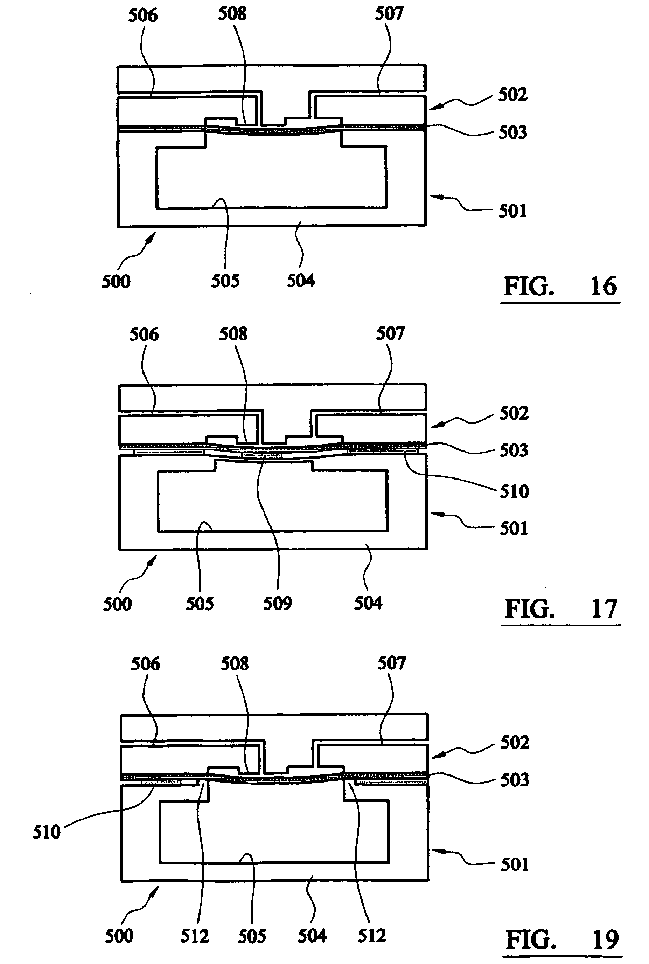

Referring to Figure 16 of the drawings, a fluidic component, such as a micro-valve 500 or pump chamber, according to an exemplary embodiment of the present invention comprises an actuator layer 501 and a fluidic layer 502 with a flexible valve membrane 503 sandwiched between them. The actuator layer 501 comprises an actuator block 504 defining a chamber 505 which contains a thermopneumatic material such as wax, fluoro-inert gas, etc. The valve membrane 503 is bonded directly to the actuator block 504, sealing the chamber 505, without the need for adhesive. The fluidic layer, which may be directly bonded to the actuator block 502 defines an inlet channel 506, an outlet channel 507, and valve seat 508 with which the valve membrane 503 co-operates to selectively open or close the fluid flow path between the inlet and outlet channels 506, 507.

Various schemes for fabricating the actuator block are noted in the following description by way of examples only. It will be appreciated that a number of designs for the actuator layer are possible, some of which will be noted in the following description, the actual design used can be based on a "mix-and-match" approach, using various design schemes, whether described in herein or otherwise, for the different parts of the actuator block.

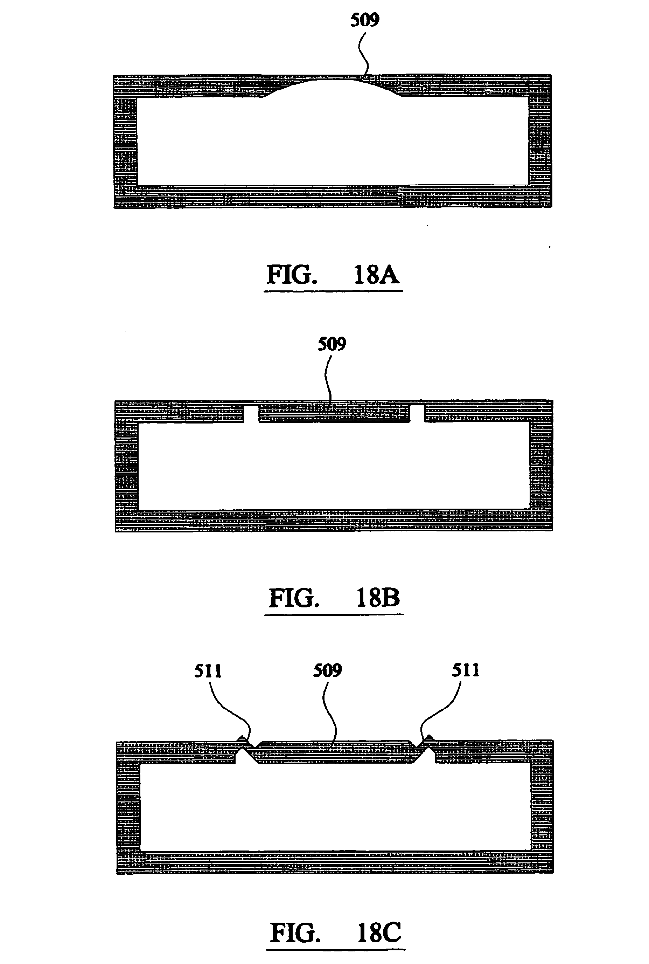

Referring to Figure 17 of the drawings a micro-valve 500 according to another exemplary embodiment of the present invention is similar in many respects to that described with reference to Figure 18, in that it comprises an actuator layer 501 and a fluidic layer 502 with a valve membrane 503 sandwiched between them. The actuator 502 again comprises an actuating block 504 defining a chamber 505 containing a thermopneumatic material. The fluidic layer 502 defines an inlet channel 506, an outlet channel 507 and a valve seat 508 with which the valve membrane 503 co-operates to selectively open and close the fluid flow path between the inlet and outlet channels 506, 507.

In this case, however, the fluidic layer 502 and valve membrane may be fabricated as an integrated unit using direct bonding, such that there is no adhesive between these parts. The actuator block 504 may be fabricated separately, with an actuator diaphragm 509 sealing the chamber 505, and adhesive bonded onto the fluidic layer 502 by, for example, one or more adhesive pads 510 which may be screen printed or otherwise provided on the actuator block 504.

Figures 18A, B and C illustrate possible designs for the actuator diaphragm 509 by way of examples only. The actuator diaphragm 509 of Figure 18A is designed to achieve maximum deflection of the centre of the diaphragm, the actuator diaphragm 509 of Figure 18B is designed to maintain the deflecting part of the membrane relatively flat, and Figure 18C illustrates another flat actuating design with concertina structures 511 at the edges of the flat deflection part to allow greater travel of the membrane 509.

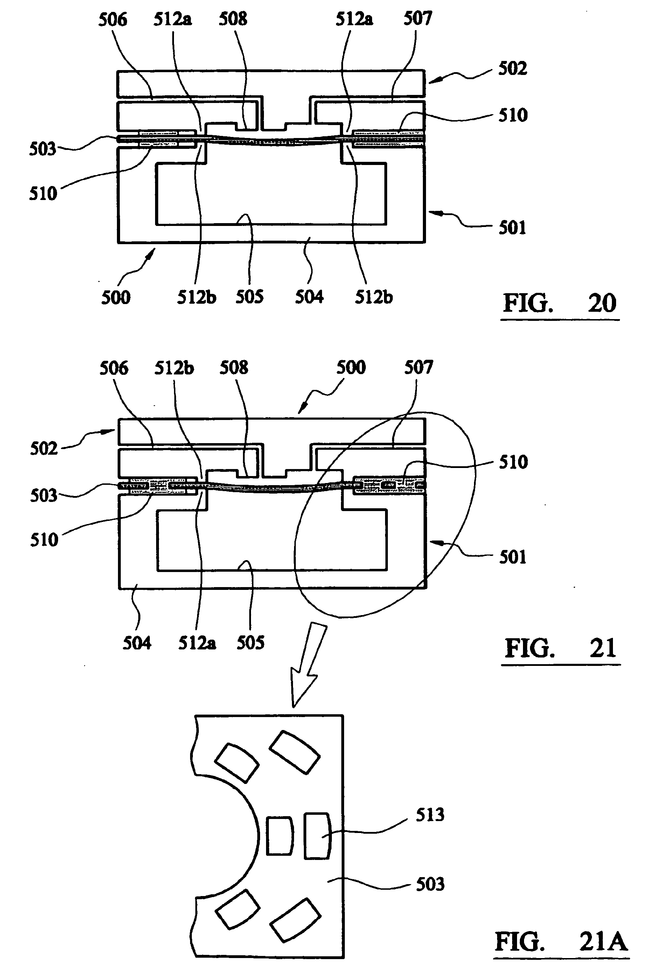

Referring to Figure 19, there is illustrated a modified version of the valve of Figure 17, in which the actuator membrane 509 is eliminated, and in which sealing structures 512 are provided around the opening of the chamber or reservoir 505 containing the thermopneumatic material (e.g. wax). The sealing structures 512 are raised areas that, when in contact with the valve membrane 503 and when under compressive pressure, seal the contents of the reservoir 505. The main advantage of this construction is that there is no direct contact between the contents of the actuator reservoir 505 and the adhesive used to construct the device.

As in the embodiment of Figure 17, the fluidic layer 502 and valve membrane 503 may be held in contact with the actuator layer 501 by adhesive pads 510 between the two layers. The adhesive might be, for example, a). polymeric, two-part or single component, heat, UV or light cured, hot melt, etc; b). metallic interlayers eutectic bonding, e.g. solder type; c) etc.

In a preferred embodiment, the adhesive may be introduced as an underfill, but other methods include painting, screen printing, drop dispensing, spraying, spincoting, dipping, etc., to provide an actuated valve of relatively simple construction.

Figure 20 of the drawings illustrates a valve similar to that of Figure 19, in which the valve membrane 503 is trapped between opposing sealing structures 512a, 513b provided on both the fluidic and actuator layers 502, 501 respectively. It can, for example, be introduced as a separate layer that is sandwiched between the fluidic and actuator layers 502, 501. It will be appreciated that this design requires adhesion of the fluidic and actuator layers 502, 501 directly to the membrane 503, which may not be possible in the case where the membrane 503 is formed of, or coated with, a non-stick material such PTFE or the like.

Referring to Figures 21 and 21A of the drawings , there is illustrated valve 500 according to another exemplary embodiment of the present invention, in which this problem is overcome by providing through-holes 513 in the valve membrane 503 through which the adhesive 510 can flow such that it can adhere to the surface of the fluidic layer 502 and actuator block 504.

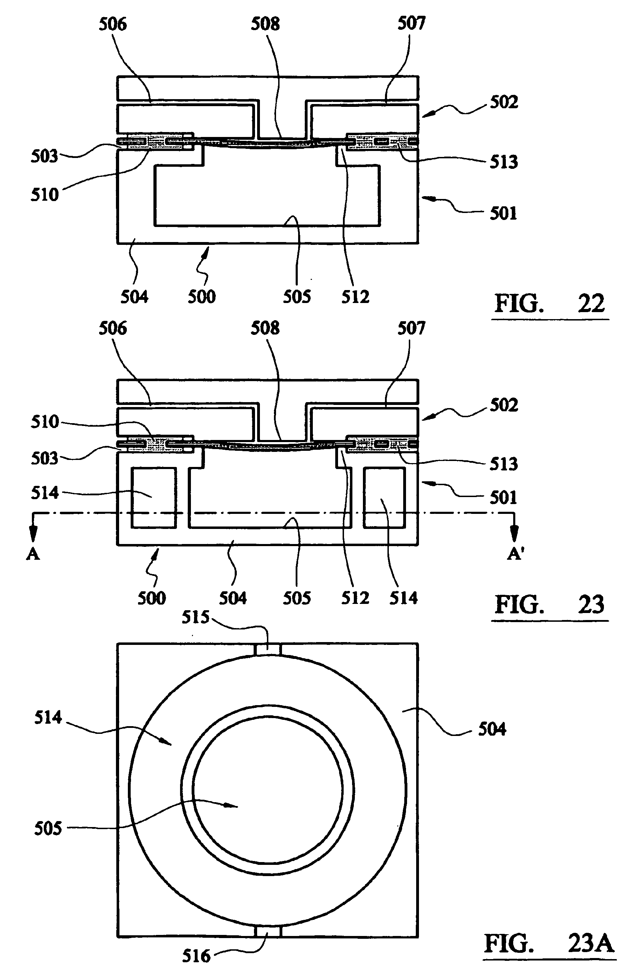

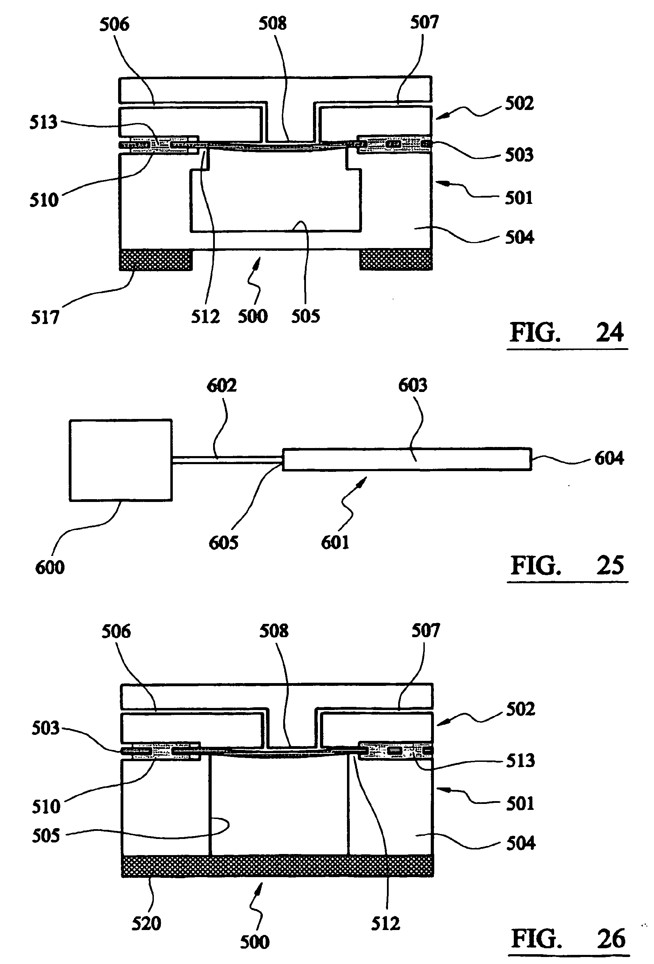

Referring to Figure 22 of the drawings, a valve 500 according to yet another exemplary embodiment of the present invention is similar in many respects to that of Figure 23, except for the design of the valve seat 508, the construction of which is such that the valve membrane 503 selectively opens and closes both the inlet and outlet channels 506, 507, in operation (i.e. there is no step provided between the inlet and outlet channels 506, 507). Many different designs of valve seat 508 can be envisaged, and the present invention is not intended to be limited in this regard.

Figures 23 and 23A of the drawings illustrate a valve similar in many respects to that of Figure 22, except that, in this case, a coding channel 514 is provided in the actuator block 504 around the reservoir 505. Gaseous and/or liquid codants can be caused to flow through the coding channels 514 (via inlet coding channel 515 and outlet channel 516) to provide cooling of the device. It will be appreciated that the illustrated design is schematic and would be optimised for specific embodiment.

Alternatively, or in addition, and referring to Figure 24 of the drawings, thermo-electric elements 517 can be attached to strategic points on the device 500 to provide localised cooling. This cooling can be defused across the device by providing a thermally conductive layer that conducts the heat from the device to the thermo-electric elements. For example, the actuator body 504 could be fabricated from silicon or metal and the thermo-electric elements 517 could be attached directly to the actuator block 504. At least in the case where the actuator body is fabricated of metal, a waveguide or optical fibre is provided in direct contact with the thermopneumatic material within the reservoir 505 to supply electromagnetic radiation thereto.

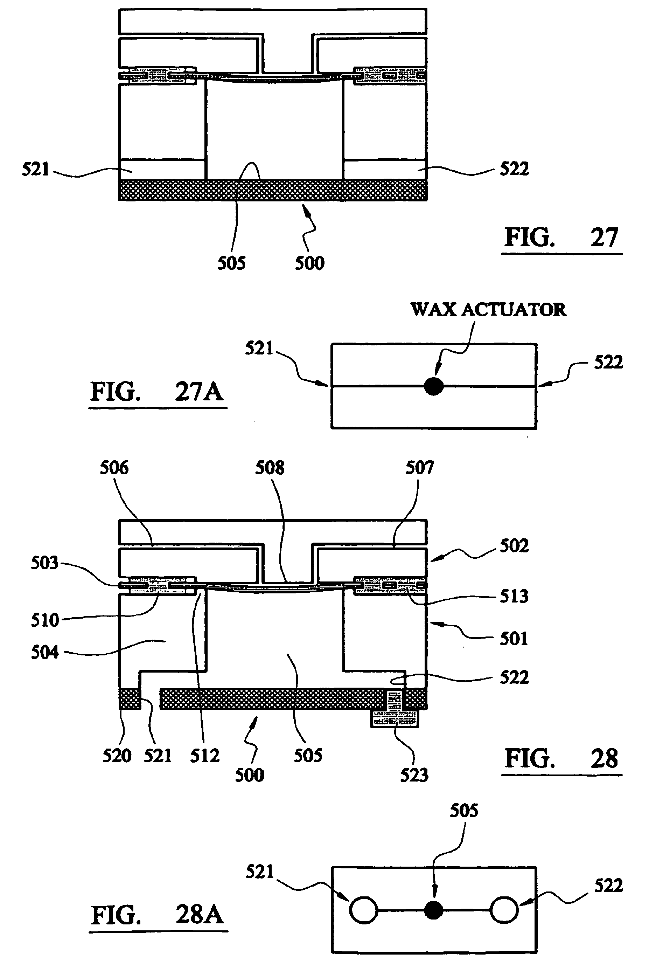

In addition, or alternatively, cooling can also be provided by:
1. Blowing a gas (preferrably cooled) onto the chip;
2. A refrigeration system could be built into the chip. For example, and referring to Figure 27 of the drawings, a pressurised gas cannister 600 can be attached to a channel system 601. The channels are structured to provide a section 602 that is directly connected to the gas cannister 600, and which has a smaller or similar cross section to the opening from the gas cannister 600. This channel 602 then connects directly to another channel 603 of larger cross-section and which terminates in an open vent 604 to the outside. Opening the system allows gas from the cannister 600 to escape through the channel system 601. The constriction of the first channel 602 maintains the gas under pressure. The opening 605 to the second channel 603 allows the gas to rapidly expand and generate cooling.

It will be appreciated that the internal structure of the wax actuator can be designed to accommodate features that improve the thermal conduction between the wax and the actuator body. This would only work if the material used to fabricate the actuator body is IR transparent. This would avoid complicated schemes for structuring the IR radiation to match the design features built into the actuator body.

The design of these structures can vary but essentially we would be increasing the surface area available for contacts between the wax and the actuator body.

In one embodiment of the invention, the actuator body may be formed an IR transparent material, in which one or more pits are formed by means of direct etching. In a preferred embodiment, the material chosen for the actuator body is bonded to an IR transparent material 520 (actuator body capping layer) and the actuator reservoir 505 is etched to expose the IR transparent material. This creates an IR transparent window into the reservoir. This can also be accomplished by forming the reservoir 505 in the actuator body 504 and then bonding the IR transparent window material 520. This is illustrated in Figure 26 of the drawings.

One of the issues which must be addressed in the fabrication of the actuators described above is how to deal with the requirement to fill the actuator reservoirs with thermopneumatic material such as wax.

Referring to Figures 27 and 27A of the drawings, one possibility is to fill the reservoirs 505 post-fabrication of the device 500. In the illustrated embodiment, an inlet 521 and outlet 522 is used to introduce wax in its molten state into the reservoir 505, following which the inlet and outlet 521, 522 would be blocked. It will be appreciated by a person skilled in the art that there are several methods available for doing this. The wax then cools and hardens.

In the example illustrated in Figures 28 and 28A, the principle is the same as that of the embodiment to Figures 27 and 27A, except that the inlet and outlet channels 521 and 522 are re-orientated. After the wax has been introduced into the reservoir 505, the inlet 521 and outlet 522 are sealed by sealing members 523.

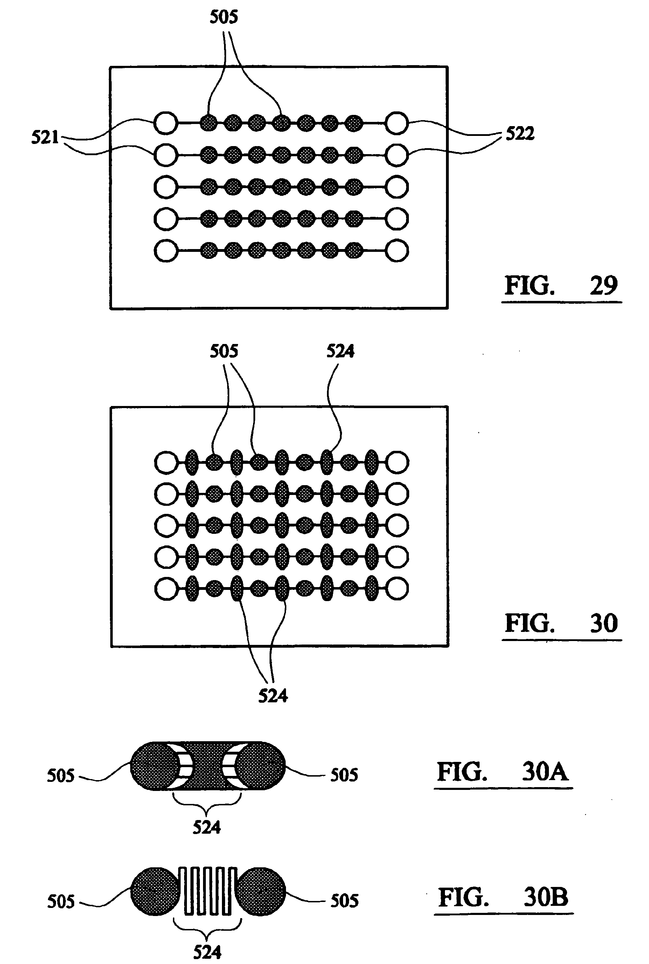

Referring to Figure 29, there is illustrated an array of wax reservoirs 505 constructed so as to allow the entire collection of actuators to be filled simultaneously.

Figure 30 illustrates a similar arrangement, in which reservoir isolator structures or check valves 524 are provided between the reservoirs 505 and each other, the associated inlet 521 and outlet 522. The concept of the check valve 524 is to prevent back-flow of wax from one actuator 505 to another. The check valve 524 may comprise a volume of wax that is structured to provide a significant sealing structure, particularly when adjacent actuators 505 have been activated and are in the liquid state. Several different designs of the check valves are envisaged, and the invention is not intended to be limited in this regard. Suffice to say that the check valves 524 should not only act as seals, but are beneficially constructed to fill uniformly across the entire collection of actuators 505. Examples are illustrated in Figures 30A and 30B of the drawings.

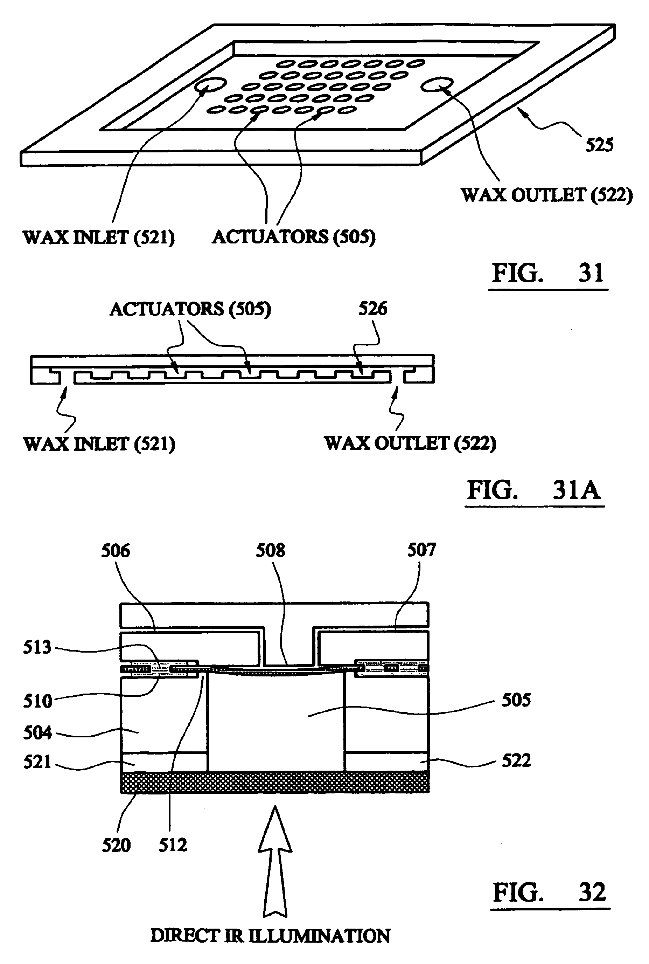

In yet another embodiment, as illustrated in Figure 31 of the drawings, an open reservoir 525 for the wax material is provided, in which the actuators 505 are defined by the position of an IR beam 526 and the location of the thinned areas on the actuator body 504.

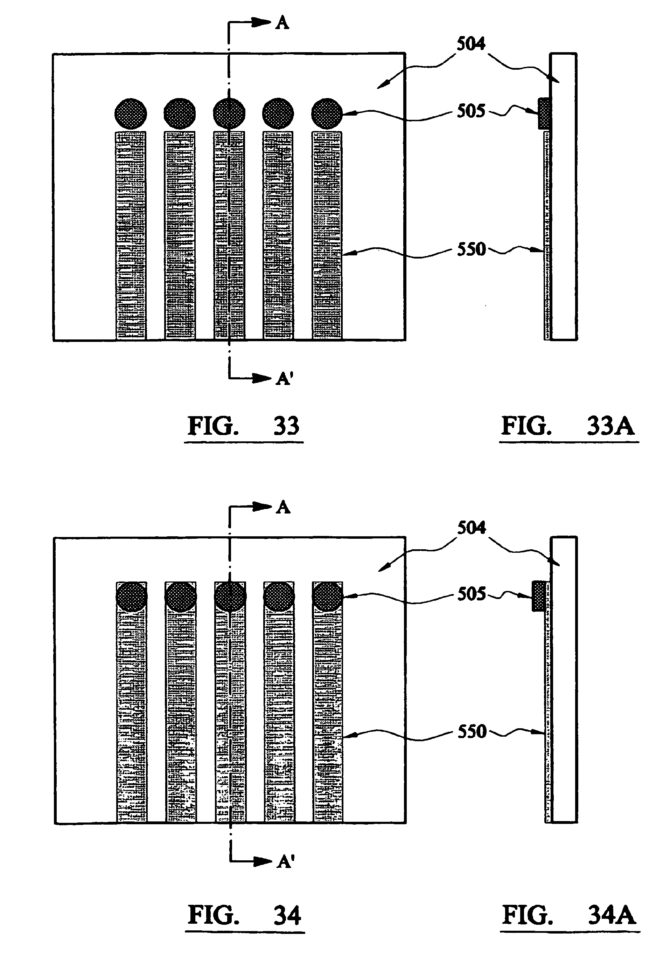

Many different methods for delivering IR to actuators present inside a system are envisaged. For example, the IR energy can be delivered directly to the sites of the actuators through IR transparent sections of the device, as illustrated in Figure 32 of the drawings.

In an alternative embodiment, electromagnetic energy may be delivered to the actuators by means of optical waveguides 550 fabricated using a variety of approaches including:
1. Plainer waveguides (as shown in Figure 33 of the drawings).
2. Optical Fibres.
3. etc

The design shown in Figure 33 of the drawings represents a waveguide edge connected to each actuator. These link the optical interface present at a convenient location on the outside of the device to the actuators located inside the device. Each waveguide is linked to a separate actuator.

Electromagnetic energy, for example, infrared radiation, is focussed on the optical facet of the respective waveguide and the waveguide then ports the radiation to the actuator. It will be appreciated that the plainer layout of these waveguides can vary according to design requirements.

In the embodiment shown in Figure 34 of the drawings, each actuator is placed on a waveguide. The waveguides perform the same function as outlined in respect of the embodiment shown in Figure 33 of the drawings. There may also be included optical structures (for example, gratings that re-orientate the light from the longitudinal access of the waveguide into the actuator).

As before, each waveguide is linked to a separate actuator, infrared radiation is focussed onto the optical facet of the respective waveguide and the waveguide then ports the radiation to the actuator. Again, the plainer layout of these waveguides can vary according to design requirements.

The interface between the optical waveguide and the actuator may be modified to control the quantity of light available to the actuator. Although this may not be as important in a single actuator system, it may become a significant issue in respect of multi-actuator systems. These interfaces can be optical gratings that deflect a proportion of light at right angles to the longitudinal access of the waveguide, optical apertures (irises), optical part reflective coatings, etc.

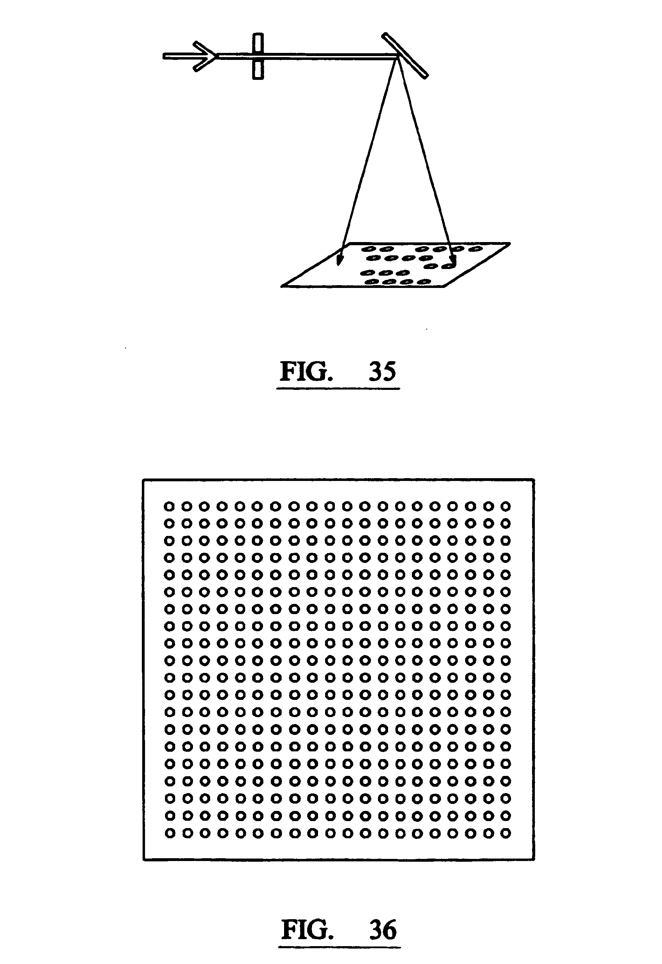

Delivery of the infrared beam can be by a single beam arrangement using conventional methods of beam delivery. These may be lenses, fibre, mirrors, etc. Delivery of the beam onto positions on a two-dimensional plain could be performed using the XY scanning mirror approach illustrated in Figure 35 of the drawings. The optical interface would either be a direct link to the wax actuator or an interface to the optical conduit linking the outside of the system with actuators located within the three dimensional structure of the system.

Alternatively, in an alternative embodiment, delivery of infrared radiation may be achieved by high power LED devices. These can either by used singly (one per actuator) or in arrays that register with arrays of optical input on the actuator layer. Figure 36 of the drawings illustrates an LED matrix, the LED's of which are individually addressable, and aligns with actuator sights or optical interfaces servicing these actuators.

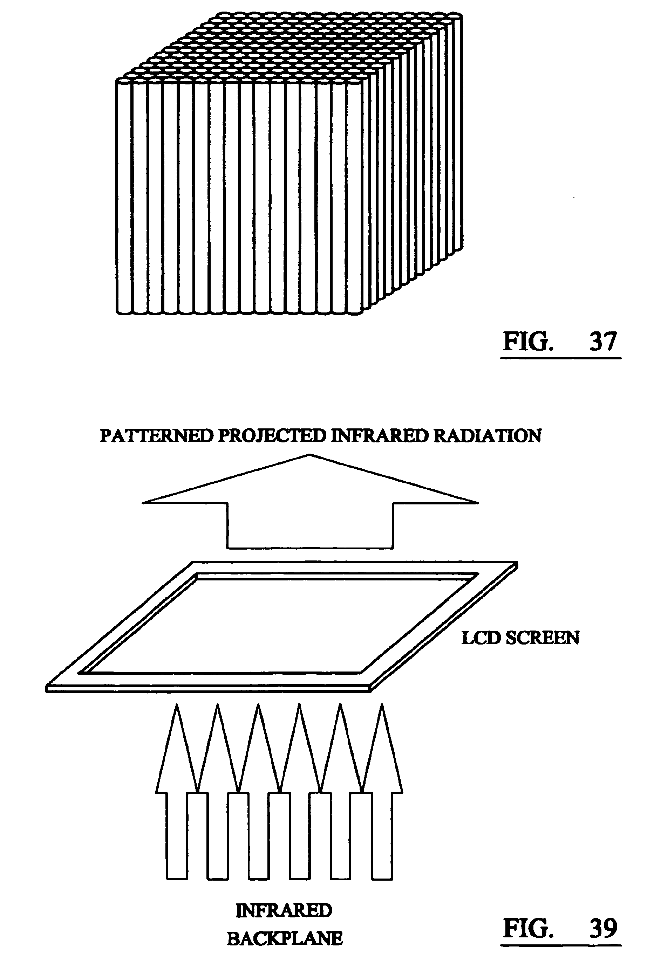

Delivery of an infrared beam from either a laser diode (or other laser source) or an LED can be via a fibre bundle. Figure 37 of the drawings illustrates an optical fibre bundle in which the optical facets line up with the respective actuator sights or respective optical interfaces servicing these sights. Each fibre can be located accurately in two dimensions and each position registers with the position of an actuator.

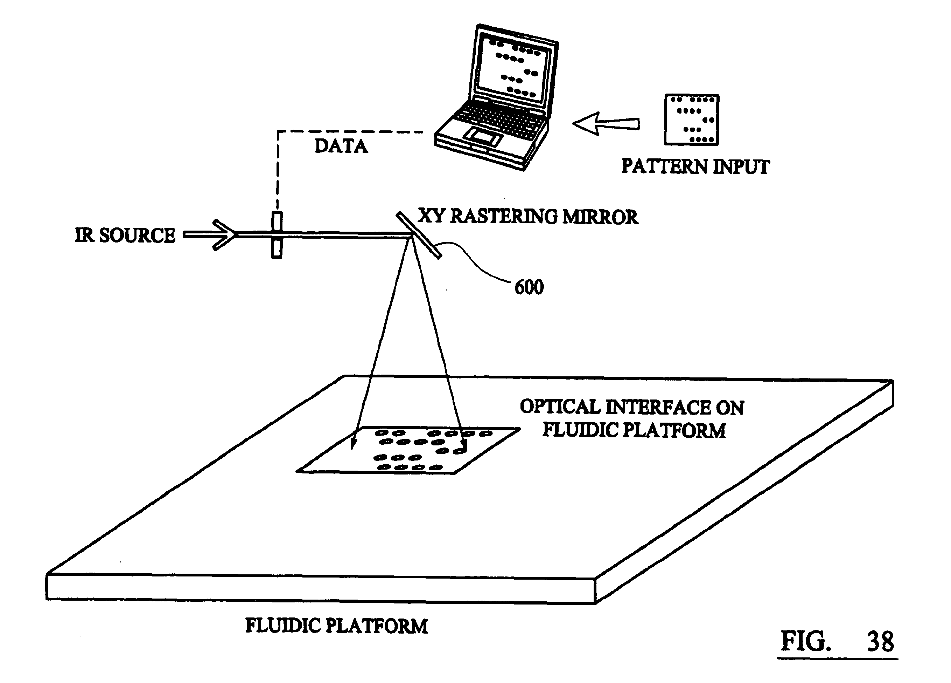

In an extension of the IR XY scanner beamed delivery system illustrated in Figure 35 of the drawings, an iris is provided which allows the beam to be switched on and off. The same control can be afforded by switching the laser on and off. This is particularly but not exclusively, suited to laser diodes. The XY scanning mirrors 600 and the iris or laser diodes switching can be controlled via a computer program. In one exemplary embodiment of the invention, the control data is formulated as a series of images (ie like frames in a movie sequence). Each frame draws in a checkered bitmap representing the on/off state of each actuator. The computer scrolls through these frames converting them to images on the optical interface of the systems using the XY mirrors 600 and the laser on/off control, similar to the control of the E-beam on a television (see Figure 38 of the drawings).

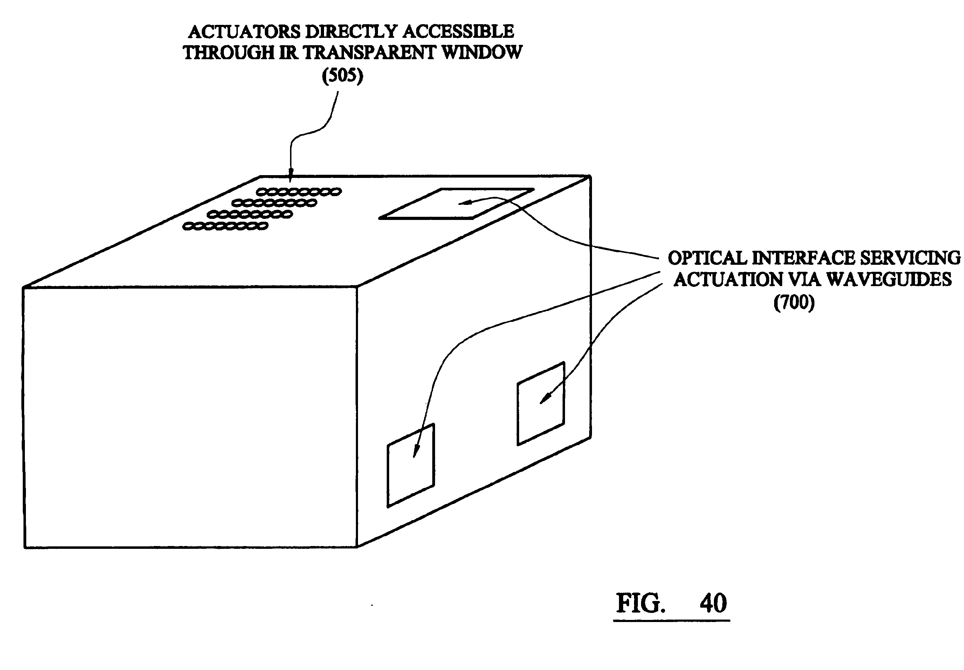

Figure 39 illustrates an LED screen which can be used to create or define a region of opacity through which the EM radiation cannot pass.

Figure 40 of the drawings illustrates a system comprising a plurality of actuators 505 directly accessible through one or more IR transparent windows, and a plurality of optical interfaces 700 servicing actuation via waveguides, for example, optical fibres.

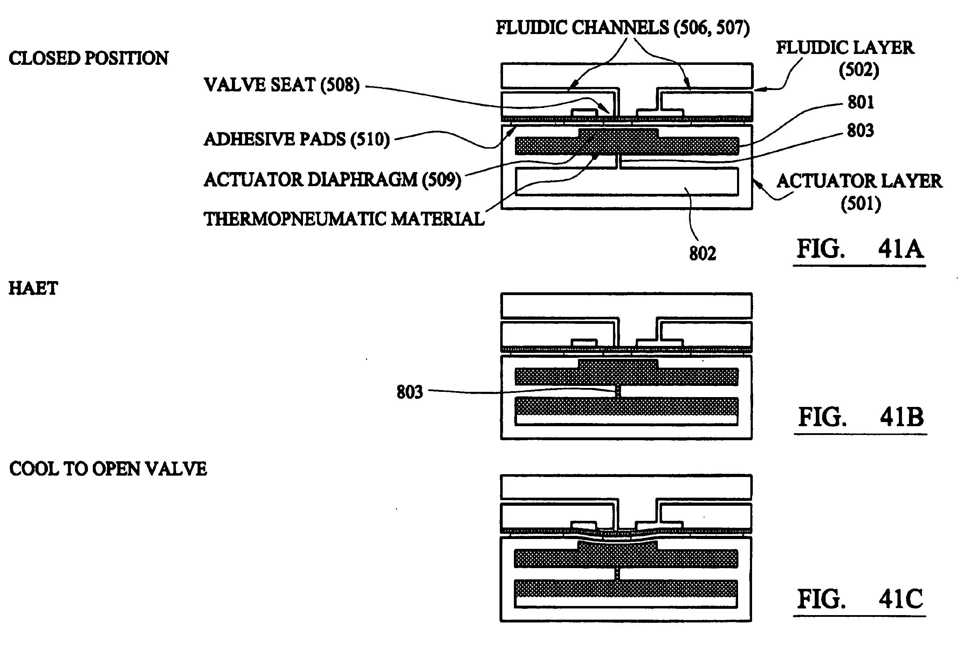

Figures 41 A, B and C illustrate a valve according to yet another exemplary embodiment of the present invention, wherein the actuator layer 501 defines two chambers 801, 802 linked by a relatively narrow fluidic junction 803. In the closed position, a thermopneumatic material such as wax fills the upper chamber 801 and maintains the actuator diaphragm 509 in the level position, thereby maintaining the fluid flow path between the inlet and outlet channels 506,507 of the fluidic layer 502 closed.

When the wax is heated, it expands and fills the second chamber 802, and because the fluidic junction 803 is relatively narrow, it cools first, to block the flow of wax back in to the first valve chamber 801. The wax is then cooled, so that the volume in the chamber 801, is reduced and the actuator diaphragm 509 contracts to open the fluid flow path between the inlet and outlet channels 506, 507.

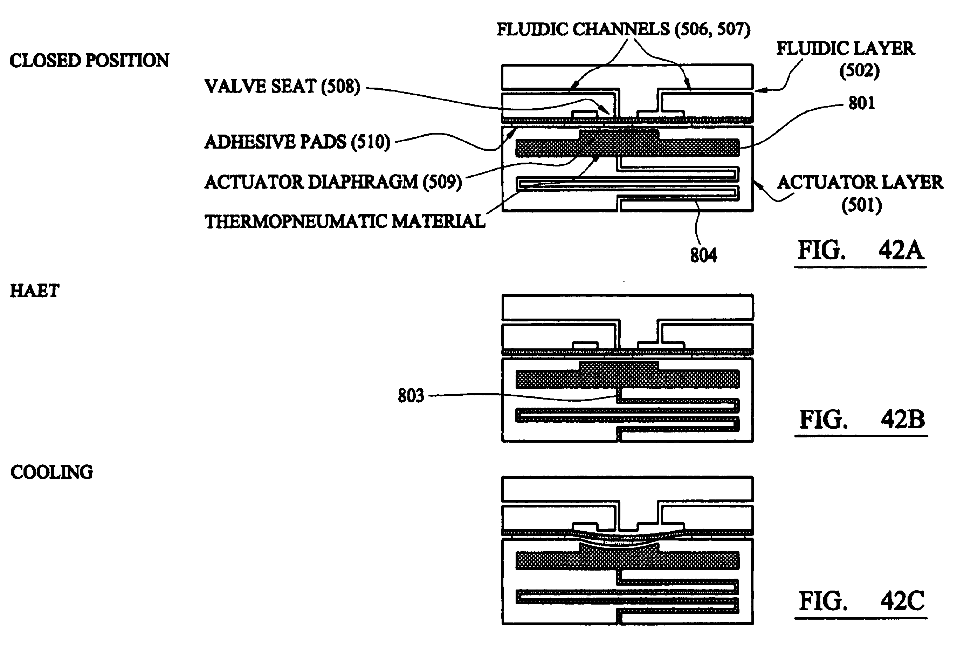

Yet another exemplary embodiment of the valve according to the present invention is illustrated in Figures 42A, B and C in which the second wax reservoir (802) of Figure 41 is replaced by a capillary channel 804. In the closed position, the solid wax substantially fills the first chamber 801 and maintains the actuator diaphragm 509 in its level position, thereby maintaining the fluid flow path between the inlet and the outlet channels 506, 507 closed. When heat is applied, the wax expands and fills the capillary channel 804. Then, as the wax cools in the capillary channel 804, it accommodates an additional proportion of the wax volume, which reduces the volume in the upper valve chamber 801, and causes the actuator diaphragm 509 to contract and open the valve.

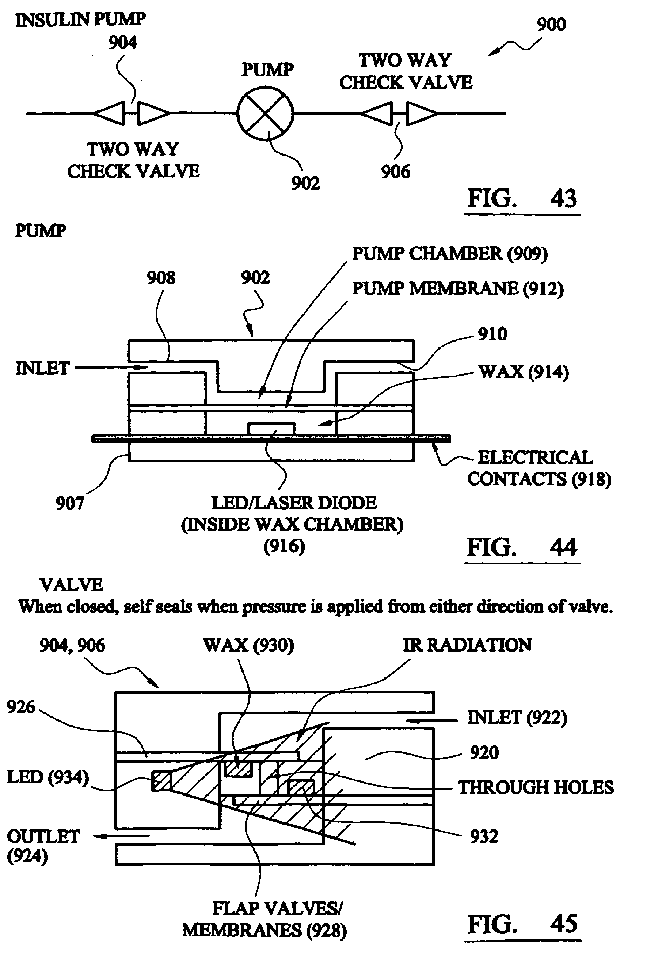

Referring to Figure 43 of the drawings, there is shown a schematic illustration of the principle components of an insulin pump 900, comprising a pump 902 having check valves 904,906 on each side of it.

Referring to Figure 44, the pump 902 according to an exemplary embodiment may comprise defining a chamber 909 having an inlet 908 and an outlet 910 with a flow path therebetween. A flexible membrane 912 is provided within the chamber 909 which confines a body of thermopneumatic material, such as wax 914. An electromagnetic source 916, such as an LED or laser diode, is provided within the body of thermopneumatic material 914, and electrical contacts 918 are provided to supply energy thereto.

In use, electromagnetic energy (from the source 916 and/or an external source) is provided to the thermopneumatic material 914 to heat it and cause a phase change, which causes the material 914 to expand. As a result the membrane 912 moves upwards to block the flow path between the inlet 908 and the outlet 910. When the wax 914 is allowed to cool, it hardens and contracts, such that the flow path is re-opened.

Referring to Figure 45 of the drawings, the check valve (904 or 906) may comprise a housing defining a chamber 920 having an inlet 922 and an outlet 924. The inlet 922 is separated from the chamber 920 by a first flexible flap or membrane 926 and the outlet 924 is separated from the chamber 920 by a second flexible flap or membrane 928. Each of the flaps 926,928 has a respective chamber 930,932 filled with wax attached thereto, and an electromagnetic radiation source 934, such as an LED, is provide within the chamber 920.

In use, when electromagnetic radiation is applied to the wax chambers 930, 932, the wax undergoes a phase change and expands, causing the respective flaps 926,928 to move in a direction away from the chamber 920, thereby opening a flow path between the inlet 922 and the outlet 924. When the wax is allowed to cool, it hardens and contracts, causing the flaps 926, 928 to move back towards the centre of the chamber 920 and block the flow path once again. If external pressure is applied to the valve via the inlet 922 or the outlet 924, it will act against the respective flap 926,928, and the valve 904,906 will remain sealed.

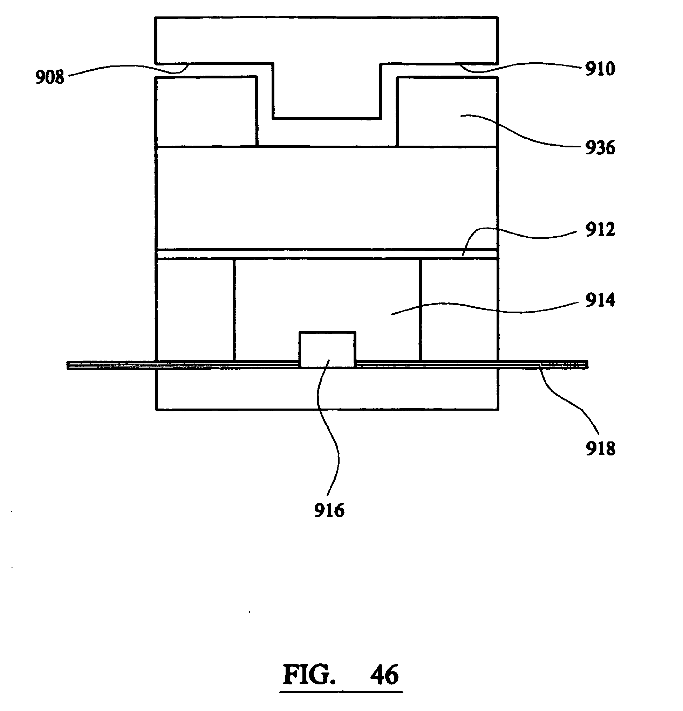

In all cases, a hydraulic chamber 936 or the like may be provided between the membrane 912 and the flow path, as shown in Figure 46 for example, to counteract the effects of uneven movement of the membrane 912 (caused by the expansion and contraction of the thermopneumatic material 914) and improve control.

The use of electromagnetic radiation to heat the components of the present invention substantially simplifies the process of transferring actuation energy to site specific points within a system. It provides high intensity energy which can, of course, be of a specific wavelength for operation of the components.

Other primary advantages of the present invention include:
1. The power available from optical light sources, and particularly laser sources, means that the rate of power supply to the components is much higher than that achievable by electric heating or thermo-electric pumps, with the effect that the rate of thermal expansion is much higher. Further, particularly in the case where the active part of the component is an actuator, it must be cooled as rapidly as it is heated so as to achieve the cycling times required by modem systems. In the case of the present invention, the active part of the component can be cooled all the time (even while it is being heated) because the intensity of power provided by the optical source(s) is sufficient to overcome such background cooling. Moreover, the rate by which such power can be made available, particularly in miniature and micro-systems, is thought to be faster than the rate of heat dissipation into the cooling system.
2. The heat from the optical source(s) does not come from the point source of a heater and, referring to some of the specific, exemplary embodiments described above, the electromagnetic radiation can be absorbed by the entire volume of thermopneumatic material. As such, the entire volume of the actuation material can be heated substantially uniformly, which overcomes the problem of heat conduction prevalent in known devices which employ a thermopneumatic material.
3. Complicated heater structures are avoided: complex suspended heaters and thermally insulated heaters have previously been employed to reduce heat loss into the bulk structure of a component (which is a particularly significant problem in miniature and micro-components) and increase the efficiency of thermopneumatic devices.
4. Light beams are much easier to control than electrical signals: in the specific exemplary system described above, an arrangement of (say) 1000 components would require two scanned laser beams to supply the necessary heating capability, whereas a comparable electrical system would require 1001 electrical connections to provide the same heating capability, or complex multiplexing systems.

Embodiments of the present invention have been described above by way of examples only, and it will be apparent to a person skilled in the art that modifications and variations can be made to the described embodiments without departing from the scope of the invention as defined by the appended claims.

## Claims

1. A system including at least one component (222, 300, 509, 902, 904, 906), at least part of which is required to be heated to effect operation thereof, and an electromagnetic radiation source (124, 126, 916, 934) for heating said component, wherein the component comprises a chamber (30, 80, 104, 505, 801, 909, 920) which is at least partially formed of a flexible material (82, 312, 314, 912), the chamber housing a thermopneumatic material (32, 84, 108, 316, 509, 914), and the system is so arranged that when said thermopneumatic material is heated by said electromagnetic radiation source, the thermopneumatic material expands within the chamber causing movement of said flexible material
**characterised in that**
said thermopneumatic material is a wax (914) which undergoes volume expansion due to a phase change upon heating, and
an electromagnetic radiation absorbing material in the form of an additive has been introduced into the wax, wherein, in use, the electromagnetic radiation absorbing material absorbs infra-red radiation of a given wavelength from the electromagnetic radiation source so as to produce a rise in temperature in the wax.

2. A system according to claim 1 wherein the wax is substantially transparent to electromagnetic radiation of said given wavelength.

3. A system according to claim 1 or claim 2 wherein the additive is a dye.

4. A system according to any preceding claim wherein said component is one of a valve (222, 500), a pumping chamber, a pump, a moveable mirror, a moveable lens, a reactor, an actuator (300), a sensor, a reaction chamber or miniature or micro versions thereof.

5. A system according to any preceding claim wherein said electromagnetic radiation source is part of or provided within the or each component.

6. A system according to any preceding claim comprising at least two electromagnetic radiation sources (124, 126, 234, 236), the beams of radiation from which are arranged to intersect at a location in or on said at least one component required to be heated.

7. A system according to claim 6 wherein one or more of the electromagnetic radiation sources is movable so as to change said location at which said beams of radiation are arranged to intersect.

8. A system according to any preceding claim comprising a plurality of said components.

9. A system according to claim 8 wherein at least some of said components being arranged to be selectively heated by the same one or more electromagnetic radiation sources.

10. A system according to any preceding claim including one or more optical waveguides (56, 550) or optical fibres for providing electromagnetic radiation to said one or more components.

11. A system according to claim 10 wherein said electromagnetic radiation source is movable relative to said one or more optical waveguides or optical fibres.

12. A system according to any of claims 1 to 9 wherein said electromagnetic source is a focussed or laser beam arranged to provide electromagnetic radiation directly to said one or more components.

13. A system according to any preceding claim wherein the electromagnetic radiation source (234, 236) is moveable relative to said at least one component (222).

14. A system according to any preceding claim wherein the electromagnetic radiation source comprises a laser (234, 236), a laser diode, a light emitting diode or an incandescent light source.

15. A component (222, 300, 509, 902, 904, 906), at least part of which is required to be heated to effect operation thereof, the component comprising a chamber (30, 80, 104, 505, 801, 909, 920) which is at least partially formed of a flexible material (82, 312, 314, 912), the chamber housing a thermopneumatic material (32, 84, 108, 316, 509, 914), the component being so arranged that when said thermopneumatic material is heated by an electromagnetic radiation source, the thermopneumatic material expands within the chamber causing movement of said flexible material
**characterised in that**
said thermopneumatic material is a wax (914) which undergoes volume expansion due to a phase change upon heating, and
an electromagnetic radiation absorbing material in the form of an additive has been introduced into the wax, wherein, in use, the electromagnetic radiation absorbing material absorbs infra-red radiation of a given wavelength so as to produce a rise in temperature in the wax.

## Patentansprüche

1. Ein System enthaltend mindestens eine Komponente (222, 300, 509, 902, 904, 906), von der mindestens ein Teil erhitzt werden muss, damit deren Funktion bewirkt wird, und eine elektromagnetische Strahlungsquelle (124, 126, 916, 934) zum Erhitzen dieser Komponente, wobei die Komponente eine Kammer (30, 80, 104, 505, 801, 909, 920) beinhaltet, die zumindest teilweise aus einem flexiblen Material (82, 312, 314, 912) gebildet ist, wobei die Kammer ein thermopneumatisches Material (32, 84, 108, 316, 509, 914) aufnimmt, und wobei das System so angeordnet ist, dass, wenn das thermopneumatische Material durch die elektromagnetische Strahlungsquelle erhitzt wird, das thermopneumatische Material innerhalb der Kammer expandiert und so eine Bewegung des flexiblen Materials bewirkt,
**dadurch gekennzeichnet, dass**
das thermopneumatische Material ein Wachs (914) ist, welches aufgrund einer Phasenumwandlung durch Erhitzen einer Volumenexpansion unterliegt, und
das ein elektromagnetische Strahlung absorbierendes Material in Form eines Additivs in das Wachs eingebracht worden ist, wobei das elektromagnetische Strahlung absorbierende Material bei seinem Einsatz Infratrot-Strahlung einer gegebenen Wellenlänge von der elektromagnetischen Strahlungsquelle absorbiert, um so eine Temperaturerhöhung im Wachs zu bewirken.

2. Ein System nach Anspruch 1, wobei das Wachs im Wesentlichen durchlässig ist für die elektromagnetische Strahlung der gegebenen Wellenlänge.

3. Ein System nach Anspruch 1 oder 2, wobei das Additiv ein Farbstoff ist.

4. Ein System nach irgendeinem der vorhergehenden Ansprüche, wobei die Komponente ein Ventil (222, 500), eine Pumpenkammer, eine Pumpe, ein beweglicher Spiegel, eine bewegliche Linse, ein Reaktor, ein Aktor (300), ein Sensor, eine Reaktionskammer oder Miniatur- oder Mikroausführungen davon ist.

5. Ein System nach irgendeinem der vorhergehenden Ansprüche, wobei die elektromagnetische Strahlungsquelle als Teil von oder innerhalb einer jeden Komponente bereitgestellt wird.

6. Ein System nach irgendeinem der vorhergehenden Ansprüche, beinhaltend mindestens zwei elektromagnetische Strahlungsquellen (124, 126, 234, 236), wobei deren Strahlung so angeordnet sind, dass sie sich an einem Ort in oder auf der mindestens einen Komponente, die zu erhitzen ist, kreuzen.

7. Ein System nach Anspruch 6, wobei eine oder mehrere der elektromagnetischen Strahlungsquellen beweglich sind, um so den Ort zu ändern, an dem sich die Strahlen kreuzen.

8. Ein System nach einem der vorhergehenden Ansprüche, umfassend eine Vielzahl dieser Komponenten.

9. Ein System nach Anspruch 8, wobei mindestens einige dieser Komponenten so angeordnet sind, dass sie selektiv durch eine gleiche Strahlungsquelle oder durch mehrere Strahlungsquellen erhitzt werden.

10. Ein System nach einem der vorhergehenden Ansprüche, enthaltend einen oder mehrere optische Wellenleiter (56, 550) oder optische Fasern, um elektromagnetische Strahlung an der einen Komponente oder den mehreren Komponenten bereitzustellen.

11. Ein System nach Anspruch 10, wobei die elektromagnetische Strahlungsquelle relativ zur dem einen Wellenleiter oder den mehreren Wellenleitern oder optischen Fasern beweglich ist.

12. Ein System nach irgendeinem der Ansprüche 1 bis 9, wobei die elektromagnetische Strahlungsquelle ein fokussierter Strahl oder ein Laserstrahl ist, der so gerichtet ist, dass er elektromagnetische Strahlung an der einen Komponente oder den mehreren Komponenten direkt bereitstellt.

13. Ein System nach irgendeinem der vorhergehenden Ansprüche, wobei die elektromagnetische Strahlungsquelle (234, 236) relativ zu der mindestens einen Komponente (222) beweglich ist.

14. Ein System nach irgendeinem der vorhergehenden Ansprüche, wobei die elektromagnetische Strahlungsquelle einen Laser (234, 236), eine Laserdiode, eine Licht emittierende Diode oder eine Glüh-Lichtquelle umfasst.

15. Eine Komponente (222, 300, 509, 902, 904, 906), von der mindestens ein Teil erhitzt werden muss, damit deren Funktion bewirkt wird, wobei die Komponente eine Kammer (30, 80, 104, 505, 801, 909, 920) beinhaltet, die zumindest teilweise aus einem flexiblen Material (82, 312, 314, 912) gebildet ist, wobei die Kammer ein thermopneumatisches Material (32, 84, 108, 316, 509, 914) aufnimmt wobei die Komponente so angeordnet ist, dass, wenn das thermopneumatische Material durch eine elektromagnetische Strahlungsquelle erhitzt wird, das thermopneumatische Material innerhalb der Kammer expandiert und so eine Bewegung des flexiblen Materials bewirkt,
**dadurch gekennzeichnet, dass**
das thermopneumatiscbe Material ein Wachs (914) ist, welches aufgrund einer Phasenumwandlung durch Erhitzen einer Volumenexpansion unterliegt, und
das ein elektromagnetische Strahlung absorbierendes Material in Form eines Additivs in das Wachs eingebracht worden ist, wobei das elektromagnetische Strahlung absorbierende Material bei seinem Einsatz Infratrot-Strahlung einer gegebenen Wellenlänge von der elektromagnetischen Strahlungsquelle absorbiert, um so eine Temperaturerhöhung im Wachs zu bewirken.

## Revendications

1. Système comprenant au moins un composant (222, 300, 509, 902, 904, 906), dont au moins une partie doit être chauffée pour amener celui-ci à fonctionner, et une source de rayonnement électromagnétique (124, 126, 916, 934) pour chauffer ledit composant, le composant comportant une chambre (30, 80, 104, 505, 801, 909, 920) qui est au moins partiellement formée d'un matériau flexible (82, 312, 314, 912), la chambre abritant un matériau thermopneumatique (32, 84, 108, 316, 509, 914), et le système étant agencé de telle sorte que lorsque ledit matériau thermopneumatique est chauffé par ladite source de rayonnement électromagnétique, le matériau thermopneumatique s'expanse dans la chambre provoquant un déplacement dudit matériau flexible
**caractérisé en ce que**
ledit matériau thermopneumatique est une cire (914) qui subit une expansion volumique en raison d'un changement de phase au cours du chauffage, et
un matériau absorbant les rayonnements électromagnétiques sous forme d'un additif a été introduit dans la cire, de telle sorte que, en fonctionnement, le matériau absorbant les rayonnements électromagnétiques absorbe les rayonnements infrarouges d'une longueur d'onde donnée provenant de la source de rayonnement électromagnétique afin de produire une élévation de température dans la cire.

2. Système selon la revendication 1, dans lequel la cire est substantiellement transparente au rayonnement électromagnétique de ladite longueur d'onde donnée.

3. Système selon la revendication 1 ou la revendication 2, dans lequel l'additif est un colorant.

4. Système selon l'une quelconque des revendications précédentes, dans lequel ledit composant est choisi parmi une soupape (222, 500), une chambre de pompage, une pompe, un miroir mobile, une lentille mobile, un réacteur, un actionneur (300), un capteur, une chambre de réaction ou une version miniature ou une micro-version de ceux-ci.

5. Système selon l'une quelconque des revendications précédentes, dans lequel ladite source de rayonnement électromagnétique fait partie du ou de chaque composant, ou est installée dans le ou chaque composant.

6. Système selon l'une quelconque des revendications précédentes, comprenant au moins deux sources de rayonnement électromagnétique (124, 126, 234, 236), dont les faisceaux de rayonnement sont disposés pour venir en intersection en un emplacement situé dans ou sur ledit au moins un composant devant être chauffé.

7. Système selon la revendication 6, dans lequel une ou plusieurs des sources de rayonnement électromagnétique est mobile afin de modifier ledit emplacement en lequel lesdits faisceaux de rayonnement sont disposés pour venir en intersection.

8. Système selon l'une quelconque des revendications précédentes, comprenant plusieurs desdits composants.

9. Système selon la revendication 8, dans lequel au moins certains desdits composants sont agencés de façon à être chauffés de manière sélective par la même ou les mêmes sources de rayonnement électromagnétique.

10. Système selon l'une quelconque des revendications précédentes, comprenant un ou plusieurs guides optiques d'ondes (56, 550) ou fibres optiques afin de transmettre le rayonnement électromagnétique audit ou auxdits composants.

11. Système selon la revendication 10, dans lequel ladite source de rayonnement électromagnétique est mobile par rapport audit ou auxdits guides optiques d'ondes ou fibres optiques.

12. Système selon l'une quelconque des revendications 1 à 9, dans lequel ladite source électromagnétique est un rayon focalisé ou laser disposé de manière à fournir le rayonnement électromagnétique directement audit ou auxdits composants,

13. Système selon l'une quelconque des revendications précédentes, dans lequel la source de rayonnement électromagnétique (234, 236) est mobile par rapport audit au moins un composant (222).

14. Système selon l'une quelconque des revendications précédentes, dans lequel la source de rayonnement électromagnétique comporte un laser (234, 236), une diode laser, une diode électroluminescente ou une source de lumière incandescente.

15. Composant (222, 300, 509, 902, 904, 906), dont au moins une partie doit être chauffée pour l'amener à fonctionner, ce composant comprenant une chambre (30, 80, 104, 505, 801, 909, 920) qui est au moins partiellement formée d'un matériau flexible (82, 312, 314, 912), la chambre abritant un matériau thermopneumatique (32, 84, 108, 316, 509, 914), le composant étant agencé de telle sorte que, lorsque ledit matériau thermopneumatique est chauffé par une source de rayonnement électromagnétique, le matériau thermopneumatique s'expanse dans la chambre provoquant un déplacement dudit matériau flexible,
**caractérisé en ce que**
ledit matériau thermopneumatique est une cire (914) qui subit une expansion volumique en raison d'un changement de phase au cours du chauffage, et
un matériau absorbant les rayonnements électromagnétiques sous forme d'un additif a été introduit dans la cire, de telle sorte que, en fonctionnement, le matériau absorbant les rayonnements électromagnétiques absorbe les rayonnements infrarouges d'une longueur d'onde donnée afin de produire une élévation de température dans la cire.
